(19) Europäisches Patentamt / European Patent Office / Office européen des brevets

(11) **EP 4 675 471 A1**

(12) **EUROPÄISCHE PATENTANMELDUNG**

(43) Veröffentlichungstag:
07.01.2026  Patentblatt 2026/02

(21) Anmeldenummer: 24186001.4

(22) Anmeldetag: 02.07.2024

(51) Internationale Patentklassifikation (IPC):
*G06F 21/44* (2013.01)    *G06F 21/73* (2013.01)
*G06Q 10/08* (2024.01)    *H04W 12/06* (2021.01)
*H04W 12/12* (2021.01)

(52) Gemeinsame Patentklassifikation (CPC):
**G06F 21/44; G06F 21/73; G06Q 10/20;**
**G06Q 30/018; H04W 12/06; H04W 12/12;**
G06Q 2220/00

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Safieh, Malek Dr.**
**81539 München (DE)**
• **Schneider, Daniel**
**80796 München (DE)**

(74) Vertreter: **Siemens Patent Attorneys**
**Postfach 22 16 34**
**80506 München (DE)**

(54) **VERFAHREN UND SYSTEM ZUR AUTHENTIFIZIERUNG EINER VON EINEM HERSTELLER HERGESTELLTEN ELEKTRONISCHEN KOMPONENTE**

(57)    Die vorliegende Erfindung betrifft ein Verfahren und ein System zur Authentifizierung einer von einem Hersteller hergestellten elektronischen Komponente (KOMP) mit den Schritten: Bereitstellen (S1; SA1; SB1) einer eindeutigen Identifizierung (ID) und eines zugehörigen individuellen Fingerprints (FP) für eine hergestellte elektronische Komponente (KOMP) wobei der für die hergestellte Komponente bereitgestellte zugehörige individuelle Fingerprint (FP) integritätsgeschützt und vertrauensgeschützt in die hergestellte Komponente (KOMP) eingebracht wird und in einer Datenbank (DB-H) des Herstellers als Referenz-Fingerprint (Ref-FP) gespeichert wird.

## FIG 1

S1 → S2 → S3 → S4 → S5 → S6 → S7

**Beschreibung**

Die vorliegende Erfindung betrifft ein computer-implementiertes Verfahren und ein System zur Authentifizierung einer von einem Hersteller hergestellten elektronischen Komponente.

Technischer Hintergrund

Feld-Komponenten (Field Devices) sind Sensoren, Aktuatoren, Flash Speicher, oder andere kleine elektronische Komponenten mit einer beschränkten Rechenleistung. Solche Komponenten kommen in vielen Anwendungen zum Einsatz, insbesondere für industrielle Anwendungen und können einzeln oder in Verbindung mit anderen Komponenten in Geräten verbaut werden. Ein Ausfall oder eine Fehlfunktion eines Feldgerätes in einem Prozess kann zu einem Fertigungsstillstand führen. Es ist daher für einen Nutzer bzw. Käufer, der ein Feldgerät als Komponente von einem Dritten bezieht, von erheblicher Bedeutung, festzustellen, ob es sich bei der Komponente um eine Originalkomponente eines bestimmten Herstellers handelt.

Aufgrund der zunehmenden Vernetzung von Geräten und elektronischen Komponenten gewinnt die Sicherheit in diesem Bereich immer mehr an Bedeutung. Wegen ihrer beschränkten Ressourcen und Rechenleistung bieten viele elektronische Komponenten, insbesondere Feld-Komponenten, meistens keinerlei Unterstützung für die Sicherheitsfunktionalität.

Bekannt ist eine Authentifizierung von Komponenten mittels digitaler Signaturverfahren durchzuführen. Diese Signaturverfahren erfordern allerdings das Vorhandensein von ausreichenden Ressourcen bei den zu authentifizierenden Komponenten.

Herkömmlicherweise können ressourcenbeschränkte elektronische Komponenten mithilfe von sogenannten PUFs (Physical Uncloneable Functions) oder mithilfe einer festgelegten und einzigartigen und eindeutigen Identität (z.B. serielle Nummer) identifiziert werden. Solche Ansätze mit statischen Fingerabdrücken bieten zwar eine Möglichkeit zur Integritätsüberprüfung sind jedoch angreifbar. Ein Angreifer kann die serielle Nummer oder Identität (gespeichert oder durch PUF generiert) einer Original-Komponente auslesen und auf mehreren minderwertigen Klon-Komponenten einspielen. Ein solcher Angriff ist nur schwer zu verhindern.

Physical Unclonable Functions (PUFs), können einen Hardware-spezifischen Fingerabdruck in einer CMOS-Schaltung erzeugen können. Dieser (in der Regel nach einer Fehlerkorrektur) erzeugte Fingerprint bzw. Fingerabdruck, oder eine Ableitung aus diesem Fingerabdruck, kann entweder als gerätespezifischer Schlüssel oder auch als "Identität / Fingerabdruck" verwendet werden.

Es gibt PUFs, die je nach Challenge unterschiedliche Fingerabdrücke bzw. Fingerprints liefern. Bei dieser Art von PUFs kann eine große Anzahl gültiger Challenge-Response-Paare verwendet werden (die zuvor in einer sicheren Umgebung generiert und in der Enrollmentphase geschützt gespeichert werden), um die Integrität und Authentizität der Komponente zu überprüfen, solange jede mögliche Challenge nur einmal verwendet wird. Dies garantiert die Einhaltung der Eigenschaft "Freshness".

Bei diesem herkömmlichen Ansatz ist keine Krypto-Funktionalität auf der elektronischen Komponente nötig. Nachteilig bei diesem Ansatz ist allerdings, dass ein großer Datensatz an Challenge-Response-Paare nötig ist und dieser Datensatz sicher gespeichert werden muss. Außerdem bringt die Verwendung einer PUF eine gewisse Komplexität mit sich.

Aus diesem Grund besteht ein Bedarf dahingehend, gefälschte oder manipulierte elektronische Komponenten mit erhöhter Sicherheit (z.B. auch mit Schutz gegen Replay-Angriffe) zu identifizieren. Es besteht dabei ein Bedarf nach einer Lösung mit geringen Ressourcen- und Leistungsanforderungen zur Erhöhung der Sicherheit von industriellen Komponenten.

Vor diesem Hintergrund liegt der vorliegenden Erfindung die Aufgabe zugrunde, ein Verfahren und System zu schaffen, die es ermöglichen elektronische Komponenten, die nur über übergeringfügige Ressourcen verfügen, effizient und sicher zu authentifizieren.

Erfindungsgemäß wird diese Aufgabe durch ein computer-implementiertes Verfahren mit den Merkmalen des Patentanspruchs 1 und/oder durch ein Authentisierungssystem mit den Merkmalen des Patentanspruches 16 erfüllt.

Die Erfindung schafft ein computer-implementiertes Verfahren zur Authentifizierung einer von einem Hersteller hergestellten elektronischen Komponente, bei dem die elektronische Komponente als von dem Hersteller stammend verifiziert wird, falls ein erster Authentifizierungstag (AT1) welcher in Abhängigkeit eines Fingerprints (FP) und einer von einem Käufer der Komponente bereitgestellten Challenge (C) von einer Berechnungseinheit oder einer Berechnungsroutine der elektronischen Komponente berechnet wird, mit einem zweiten Authentifizierungstag (AT2) übereinstimmt, welcher in Abhängigkeit eines gespeicherten Referenz-Fingerprints berechnet wird.

Der berechnete Authentisierungstag (AT) kann einen berechneten Hashwert (H) oder einen von einem anderen Algorithmus berechneten Wert. Beispiel-Algorithmen für die Berechnung eines Authentifizierungstags (AT) umfassen MAC, CMAC, HMAC, GMAC oder ein AEAD für die Berechnung eines Authentifizierungstags MAC-Wert (MAC).

Der Fingerprint (FP) wird bei einer möglichen Ausführungsform von dem Hersteller der elektronischen Komponente (KOMP) vergeben und in der elektronischen Komponente (KOMP) integritätsgeschützt und vertrauenswürdig gespeichert.

Der Fingerprint (FP) kann von dem Hersteller bei der Vergabe des Fingerprint FP an die Komponente (KOMP) geschützt gespeichert werden.

Bei einer bevorzugten Ausführungsform weist der berechnete Authentifizierungstag AT ein MAC-Authentifizierungstag auf.

Bei einer weiteren möglichen Ausführungsform weist der berechnete Authentifizierungstag AT einen Hashwert H auf.

Der erste Authentifizierungstag wird hierbei vorzugsweise in einem Challenge-Response-Verfahren von der Komponente als Response zu einer Challenge ausgegeben, die mit dem von dem Hersteller an die Komponente vergebenen Fingerprint verknüpft wird.

Die Erfindung schafft hierzu gemäß einer möglichen Ausführungsform ein computer-implementiertes Verfahren zur Authentifizierung einer von einem Hersteller hergestellten elektronischen Komponente mit den Schritten:
Vergeben einer eindeutigen Identifizierung (ID) und eines zugehörigen individuellen Fingerprints (FP) für eine hergestellte elektronische Komponente durch eine Recheneinheit des Herstellers (RE-H) der elektronischen Komponente, wobei der für die hergestellte Komponente vergebene zugehörige individuelle Fingerprint (FP) integritätsgeschützt und vertraulichkeitsgeschützt in die hergestellte Komponente eingebracht wird und in einer Datenbank (DB-H) des Herstellers oder einem sonstigen für den Hersteller zugänglichen Speicher als Referenz-Fingerprint (Ref-FP) gespeichert wird;

Abfragen der eindeutigen Identifizierung (ID) der elektronischen Komponente durch eine Recheneinheit eines Käufers (RE-K) der elektronischen Komponente, welcher die elektronische Komponente von dessen Hersteller über eine Lieferkette erhalten hat;

Übertragen einer Challenge (C) durch die Recheneinheit des Käufers (RE-K) an die elektronische Komponente, welche die erhaltene Challenge (C) mit dem integritätsgeschützten und vertraulichkeitsgeschützten Fingerprint (FP) zu einem Verknüpfungswert verknüpft und basierend auf dem gebildeten Verknüpfungswert einen zu dem Fingerprint (FP) zugehörigen ersten Authentifizierungstag (AT1) berechnet;

Übertragen des zu dem Fingerprint (FP) gehörigen berechneten ersten Authentifizierungstags (AT1) als Response (R) von der elektronischen Komponente zu der Recheneinheit des Käufers (RE-K) und/oder zu der Recheneinheit (RE) des Herstellers (RE-H);

Berechnen durch die Recheneinheit des Käufers (RE-K) und/oder durch die Recheneinheit (RE) des Herstellers (RE-H) eines zweiten Authentifizierungstags basierend auf einem Verknüpfungswert, welcher durch Verknüpfung der Challenge (C) mit dem aus der Datenbank des Herstellers (DB-H) ausgelesenen Referenz-Fingerprint (Ref-FP) gebildet wird;

Vergleichen durch die Recheneinheit des Käufers (RE-K) und/oder durch die Recheneinheit des Herstellers (RE-H) des von der elektronischen Komponente als Response (R) erhaltenen ersten Authentifizierungstag (AT1) mit dem berechneten zweiten Authentifizierungstag (AT2); und

Verifizieren der Authentizität der elektronischen Komponente, falls die beiden durch die Recheneinheit des Käufers (RE-K) und/oder durch die Recheneinheit des Herstellers (RE-H) miteinander verglichenen Authentifizierungstags (AT1, AT2) übereinstimmen.

Das erfindungsgemäße Verfahren erlaubt es, die Sicherheit der Authentisierung und Authentifizierung von elektronischen Komponenten, die nur über geringe Ressourcen und insbesondere über keine asymmetrische Krypto-Funktionalität verfügen, zu erhöhen.

Die Reihenfolge der oben genannten Schritte kann je nach Implementierung und Anwendungsfall des erfindungsgemäßen computer-implementierten Verfahrens variieren.

Im Rahmen dieser Erfindung wird ein Konzept vorgeschlagen, welche die Feststellung der Integrität, Originalität und Authentizität einer elektronischen Komponente mit minimalen Anforderungen ermöglicht. Außerdem bietet das erfindungsgemäße Verfahren eine erhöhte Sicherheit gegenüber Replay-Attacken.

Bei der in dem erfindungsgemäßen Verfahren verwendeten Challenge Response Methode stellt ein Teilnehmer (nämlich die Recheneinheit RE_K des Käufers K) eine Aufgabe (engl. Challenge), welche die Komponente lösen muss (engl. Response), um zu beweisen, dass sie eine bestimmte Information (gemeinsames Geheimnis nämlich den Fingerprint FP) kennt, ohne dass diese Information selbst übertragen wird.

Mit dem Begriff Hashfunktion wird eine Abbildung bezeichnet, die eine große Eingabemenge (Schlüssel) auf eine kleinere Zielmenge (Hashwerte bzw. Streuwerte) abbildet. Mit dem Begriff Hashing wird die Umwandlung einer Zeichenfolge in einen kürzeren, numerischen Wert bzw. Schlüssel mit einer festen Länge bezeichnet. Der berechneter Hashwert H bildet seinerseits einen Fingerabdruck der aus Challenge C und Fingerabdruck FP gebildeten Verknüpfungskette. Eine Hashfunktion stellt eine Einwegfunktion (One-Way-Function) dar. Das heißt aus dem Ausgang der Funktion / das Ergebnis ist es extrem schwer die Eingänge zu rekonstruieren. Drei wichtige Eigenschaften von Hashfunktionen umfassen Collision resistance, Preimage resistance, Second pre-image resistance.

Das berechnete Authentifizierungstag (AT), insbesondere ein berechneter Hashwert, hat die Eigenschaft, dass sich aus dem berechneten Wert des Authentifizierungstags (AT) nicht der Fingerprint (FP) berechnen lässt (Einwegfunktion).

Bei einer möglichen Ausführungsform des Verfahren zur Authentifizierung einer von einem Hersteller hergestellten elektronischen Komponente erfolgt in einer ersten Variante A ein Senden der abgefragten eindeutigen Identifizierung (ID) der elektronischen Komponente über einen sicheren Kommunikationskanal an die Recheneinheit des Herstellers (RE-H) der elektronischen Komponente zur Anforderung des zugehörigen individuellen Fingerprints der ausgelieferten elektronischen Komponente.

Der dabei verwendete sichere Kommunikationskanal kann ein beidseitig authentisierter Kanal sein, beispielsweise TLS/SSH.

Bei einer möglichen Ausführungsform des Verfahren zur Authentifizierung einer von einem Hersteller hergestellten elektronischen Komponente erfolgt anschließend in der ersten Variante (A) ein Auslesen des zugehörigen Referenz-Fingerprints (Ref-FP) aus der integritätsgeschützten Datenbank (DB-H) des Herstellers anhand des von der Recheneinheit des Herstellers (RE-H) über den sicheren Kommunikationskanal von der Recheneinheit des Käufers (RE-K) der elektronischen Komponente empfangenen eindeutigen Identifizierung (ID) der elektronischen Komponente(KOMP). Die Identifizierung (ID) wird zur Identifizierung der Komponente in der Datenbank des Herstellers (DB-H) verwendet. Die Identifizierung (ID) der elektronischen Komponente entspricht nicht dem Fingerprint FP der elektronischen Komponente KOMP.

In einer anderen Variante des erfindungsgemäßen Verfahrens verfügt die elektronische Komponente (KOMP) über keine Identifizierung (ID). In diesem Fall kann die Recheneinheit des Käufers (RE-K) damit starten eine Challenge C an die elektronische Komponente KOMP zu senden. Eine Berechnungseinheit der elektronischen Komponente KOMP rechnet daraus eine Response R. Dann kann die Recheneinheit des Käufers (RE-K) einen sicheren (insbesondere hinsichtlich der Integrität geschützter) Kanal zu der Recheneinheit des Herstellers (RE-H) aufbauen und sowohl die Challenge C als auch die von der Komponente KOMP hierfür berechnete Response R schicken. Die Recheneinheit des Herstellers (RE-H) kann dann mit diesen beiden Informationen nach dem passenden Referenzfingerprint (REF-FP) suchen (ohne die ID zu kennen).

Beispielsweise kann die Recheneinheit des Herstellers (RE-H) in der Datenbank des Herstellers (DB-H) nach einem Ref-Fingerprint suchen, bei dem die folgende Gleichung erfüllt ist:

$$\text{Response} = \text{Hash (Challenge} \mid \text{Ref-Fingerprint)},$$

wobei die Challenge C und die Response R bekannt sind. Die Lösung ist rechenaufwendig aber auch gültig.

Bei einer möglichen Ausführungsform des Verfahren zur Authentifizierung einer von einem Hersteller hergestellten elektronischen Komponente erfolgt anschließend in der ersten Variante (A) ein Senden des aus der integritätsgeschützten Datenbank des Herstellers (DB-H) der elektronischen Komponente ausgelesenen Referenz-Fingerprints (FP) durch die Recheneinheit des Herstellers (RE-H) über den sicheren Kommunikationskanal an die Recheneinheit des Käufers (RE-K) der elektronischen Komponente, welcher in der Recheneinheit des Käufers (RE-K) gespeichert wird.

Der Fingerprint FP der elektronischen Komponente sowie der Ref-Fingerprint (REF-FP) der elektronischen Komponente werden stets hinsichtlich Integrität und Vertraulichkeit geschützt übertragen und gespeichert.

Bei einer möglichen Ausführungsform des Verfahren zur Authentifizierung einer von einem Hersteller hergestellten elektronischen Komponente erfolgt in einer zweiten Variante (B) ein Speichern der abgefragten eindeutigen Identifizierung (ID) der elektronischen Komponente in einem Speicher der Recheneinheit des Käufers (RE-K).

Bei einer möglichen Ausführungsform des Verfahren zur Authentifizierung einer von einem Hersteller hergestellten elektronischen Komponente erfolgt in der zweiten Variante (B) ein Senden durch die Recheneinheit des Käufers (RE-K) der von der elektronischen Komponente abgefragten und gespeicherten eindeutigen Identifizierung (ID) der elektronischen Komponente zusammen mit der Challenge (C) und zusammen mit dem von der elektronischen Komponente als Response (R) erhaltenen ersten Authentifizierungstags (AT1) über einen sicheren Kommunikationskanal an die Recheneinheit des Herstellers (RE-H) der elektronischen Komponente zur Anforderung einer Verifizierung der Komponente durch die Recheneinheit des Herstellers (RE-H).

Bei einer möglichen Ausführungsform des Verfahren zur Authentifizierung einer von einem Hersteller hergestellten elektronischen Komponente erfolgt in der zweiten Variante (B) ein Auslesen des zugehörigen Referenz-Fingerprints (Ref-FP) aus der integritätsgeschützten Datenbank (DB-H) des Herstellers anhand des von der Recheneinheit des Herstellers (RE-H) über den sicheren Kommunikationskanal von der Recheneinheit des Käufers (RE-K) empfangenen eindeutigen Identifizierung (ID) der elektronischen Komponente.

Bei einer möglichen Ausführungsform des Verfahren zur Authentifizierung einer von einem Hersteller hergestellten elektronischen Komponente wird die durch die Recheneinheit des Käufers (RE-K) an die elektronische Komponente übertragene Challenge (C) mit dem integritätsgeschützten Fingerprint (FP) zur Bildung eines Verknüpfungswert verkettet und basierend auf dem gebildeten Verknüpfungswert wird der zu dem Fingerprint (FP) zugehörige erste Authentifizierungstag (AT1) berechnet.

Bei einer möglichen Ausführungsform des Verfahren zur Authentifizierung einer von einem Hersteller hergestellten elektronischen Komponente weist der individuelle Fingerprint (FP) für eine hergestellte elektronische Komponente eine generierte Zufallszahl auf.

Bei einer möglichen Ausführungsform des Verfahren zur Authentifizierung einer von einem Hersteller hergestellten elektronischen Komponente weist der individuelle Fingerprint (FP) für eine hergestellte elektronische Komponente einen hardwarespezifischen Fingerprint auf, der mittels einer PUF (Physical Unclonable Function) aus den physikalischen Eigenschaften und Herstellungsvariationen der elektronischen Komponente erzeugt wird.

Bei einer möglichen Ausführungsform des Verfahren zur Authentifizierung einer von einem Hersteller hergestellten elektronischen Komponente wird der individuelle Fingerprint (FP) für eine hergestellte elektronische Komponente in einem Firmware-Code der Komponenten integritätsgeschützt und vertraulichkeitsgeschützt integriert und/oder in einem Datenspeicher der Komponente integritätsgeschützt und vertraulichkeitsgeschützt gespeichert.

Bei einer möglichen Ausführungsform des Verfahren zur Authentifizierung einer von einem Hersteller hergestellten elektronischen Komponente weist der zwischen der Recheneinheit des Herstellers (RE-H) und der Recheneinheit des Käufers (RE-K) bestehende sichere Kommunikationskanal einen beidseitig authentisierten Kanal auf, insbesondere TLS oder SSH.

Bei einer möglichen Ausführungsform des Verfahrens zur Authentifizierung einer von einem Hersteller hergestellten elektronischen Komponente wird die Challenge durch einen Random-Zahlengenerator oder durch einen Zähler der Recheneinheit des Käufers (RE-K) generiert wird.

Bei einer möglichen Ausführungsform des Verfahrens zur Authentifizierung einer von einem Hersteller hergestellten elektronischen Komponente wird jede generierte Challenge nur einmal verwende. Dies erfolgt beispielsweise mit Hilfe eines Zählers, der nur hoch oder runter zählen kann.

Hierdurch werden möglich Replay-Angriffe erfolgreich verhindert bzw. unterbunden.

Bei einer möglichen Ausführungsform des Verfahren zur Authentifizierung einer von einem Hersteller hergestellten elektronischen Komponente ist die elektronische Komponente als Bauteil in einem Gerät des Käufers verbaut oder weist eine eigenständige Komponente auf.

Bei einer möglichen Ausführungsform des Verfahren zur Authentifizierung einer von einem Hersteller hergestellten elektronischen Komponente weist die elektronische Komponente eine Feld-Komponente mit beschränkter Rechenleistung und beschränkter Speicherkapazität auf.

Ein Feldgerät bzw. eine Feldkomponente (engl. Field Device (FD)) ist eine technische Einrichtung im Bereich der Automatisierungstechnik, die mit einem Produktionsprozess in direkter Beziehung steht. Der Begriff "Feld" bezeichnet in der Automatisierungstechnik den Bereich außerhalb von Schaltschränken bzw. Leitwarten. Feldkomponenten können somit sowohl Aktoren (Stellglieder, Ventile etc.) als auch Sensoren (Messumformer) in der Fabrik- und Prozessautomation sein. Die Feldgeräte sind mit einem Steuerungs- und Leitsystem, meist über einen Feldbus oder über Echtzeit-Ethernet verbunden.

Die Erfindung schafft ferner gemäß einem weiteren Aspekt ein System zur Authentifizierung einer von einem Hersteller hergestellten elektronischen Komponente mit:

einer Recheneinheit des Herstellers (RE-H) der elektronischen Komponente, die dazu ausgelegt ist, eine eindeutige Identifizierung (ID) und einen zugehörigen individuellen Fingerprints (FP) für eine von dem Hersteller hergestellte elektronische Komponente zu vergeben, wobei der für die hergestellte Komponente vergebene zugehörige individuelle Fingerprint (FP) integritätsgeschützt und vertrauensgeschützt in die hergestellte Komponente eingebracht wird und in einer Datenbank (DB-H) des Herstellers als Referenz-Fingerprint (Ref-FP) gespeichert wird;

einer Recheneinheit eines Käufers (RE-K) der elektronischen Komponente, welcher die elektronische Komponente von dessen Hersteller über eine Lieferkette erhalten hat, die dazu ausgelegt ist, die eindeutige Identifizierung (ID) der elektronischen Komponente abzufragen und die dazu ausgelegt ist, eine Challenge (C) an die elektronische Komponente zu übertragen;

wobei die elektronische Komponente eine integrierte Berechnungseinheit aufweist, welche dazu ausgelegt ist, die von der Recheneinheit des Käufers (RE-K) erhaltene Challenge (C) mit dem in ihr eingebrachten integritätsgeschützten Fingerprint (FP) zu einem Verknüpfungswert zu verknüpfen und basierend auf dem gebildeten Verknüpfungswert einen zu dem Fingerprint (FP) zugehörigen ersten Authentifizierungstag (AT1) zu berechnen und diesen ersten Authentifizierungstag (AT1) als Response (R) zu der Recheneinheit des Käufers (RE-K) und/oder zu der Recheneinheit (RE) des Herstellers (RE-H) zu übertragen;

wobei die Recheneinheit des Käufers (RE-K) und/oder durch die Recheneinheit des Herstellers (RE-H) dazu ausgelegt ist, einen zweiten Authentifizierungstag (AT2) basierend auf einem Verknüpfungswert, welcher durch Verknüpfung der Challenge (C) mit dem aus der Datenbank des Herstellers ausgelesenen Referenz-Fingerprint (Ref-FP) gebildet wird, zu berechnen, und wobei die Recheneinheit des Käufers (RE-K) und/oder durch die Recheneinheit (RE) des Herstellers (RE-H) dazu ausgelegt ist, die Authentizität der elektronischen Komponente zu verifizieren, falls die beiden durch die Recheneinheit des Käufers (RE-K) und/oder durch die Recheneinheit des Herstellers (RE-H) miteinander verglichenen Authentifizierungstags (AT1, AT2) übereinstimmen.

Bei einer möglichen Ausführungsform des Authentifizierungssystems zur Authentifizierung einer von einem Hersteller hergestellten elektronischen Komponente wird zwischen der Recheneinheit des Herstellers (RE-H) und der Recheneinheit des Käufers (RE-K) ein sicherer Kommunikationskanal aufgebaut.

Vorzugsweise erhält die Recheneinheit des Käufers (RE-K) nicht nur den Ref-Fingerprint (Ref-FP) von der Recheneinheit des Herstellers (RE-H) über den beidseitig authentisierten und sicheren Kommunikationskanal, sondern auch zusätzliche Informationen für die nachfolgende Berechnung, wie beispielsweise welche Hash-Funktion oder sonstige Berechnungsfunktion B verwendet werden soll.

Die Erfindung schafft ferner gemäß einem weiteren Aspekt eine Recheneinheit (RE) für ein Authentifizierungssystem zur Authentifizierung einer von einem Hersteller hergestellten elektronischen Komponente, wobei die Recheneinheit (RE) dazu ausgelegt ist, die eindeutige Identifizierung (ID) der elektronischen Komponente über eine Schnittstelle abzufragen und die dazu ausgelegt ist, eine generierte Challenge (C) an die elektronische Komponente zu übertragen und einen ersten Authentifizierungstag als Response (R) von der elektronischen Komponente zu erhalten, und die dazu ausgelegt ist, einen zweiten Authentifizierungstag basierend auf einem Verknüpfungswert, welcher durch Verknüpfung der lokal generierten Challenge (C) mit dem aus einer Datenbank des Herstellers ausgelesenen Referenz-Fingerprint (Ref-FP) gebildet wird, zu berechnen, und die ferner dazu ausgelegt ist, die Authentizität der elektronischen Komponente zu verifizieren, falls die beiden durch die Recheneinheit (RE) miteinander verglichene Authentifizierungstags übereinstimmen.

Die Erfindung schafft ferner gemäß einem weiteren Aspekt eine elektronische Komponente, die durch ein Authentifizierungssystem verifizierbar ist, wobei die elektronische Komponente eine integrierte Berechnungseinheit oder integrierte Berechnungsroutine aufweist, welche dazu ausgelegt ist, eine von einer Recheneinheit (RE) des Authentifizierungssystems erhaltene Challenge (C) mit dem in der elektronischen Komponente enthaltenen integritätsgeschützten Fingerprint (FP) zu einem Verknüpfungswert zu verknüpfen und basierend auf dem gebildeten Verknüpfungswert einen zu dem Fingerprint (FP) zugehörigen ersten Authentifizierungstag (AT1) zu berechnen, und die dazu ausgelegt ist, den berechneten ersten Authentifizierungstag (AT1) als Response (R) zu der Recheneinheit (RE) des Authentifizierungssystems zu übertragen.

Bei einer möglichen Ausführungsform der elektronischen Komponente ist die elektronische Komponente als Bauteil in einem Gerät des Käufers verbaut.

Bei dem Gerät kann es sich beispielsweise um ein IT-Gerät, ein IoT-Gerät ( IoT: Internet of Things) oder um ein OT-Gerät handeln.

Bei einer möglichen Ausführungsform der elektronischen Komponente ist die elektronische Komponente eine eigenständige nicht in einem anderen Gerät verbaute Komponente.

Bei einer möglichen Ausführungsform der elektronischen Komponente weist die elektronische Komponente eine Feld-Komponente mit beschränkter Rechenleistung und mit beschränkter Speicherkapazität auf, insbesondere einen Sensor, einen Aktuator oder eine Speicherkomponente.

Die Erfindung schafft ferner gemäß einem weiteren Aspekt ein Gerät mit mindestens einer darin als Bauteil verbauten erfindungsgemäßen elektronischen Komponente.

Bei einer möglichen Ausführungsform des Gerätes weist das Gerät eine drahtlose oder drahtgebundene Schnittstelle zu einer Recheneinheit (RE) des Authentifizierungssystems auf.

Die Erfindung schafft ferner eine sichere Komponente für ein Gerät, die dazu ausgelegt ist, eine Challenge (C) zu generieren, eine Response (R) zu empfangen, Authentifizierungstags (AT) zu berechnen und Authentifizierungstags (ATs) miteinander zu vergleichen.

Vorteilhafte Ausgestaltungen und Weiterbildungen ergeben sich aus den weiteren Unteransprüchen sowie aus der Beschreibung unter Bezugnahme auf die Figuren der Zeichnung.

Es zeigen:

Fig.1 ein Ablaufdiagramm zur Darstellung einer möglichen Ausführungsform des erfindungsgemäßen Verfahrens;

Fig.2 ein Signaldiagramm zur Darstellung einer ersten möglichen Variante A des erfindungsgemäßen Verfahrens;

Fig.3 ein Signaldiagramm zur Darstellung einer zweiten möglichen Variante B des erfindungsgemäßen Verfahrens.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

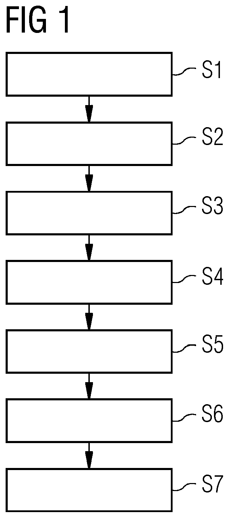

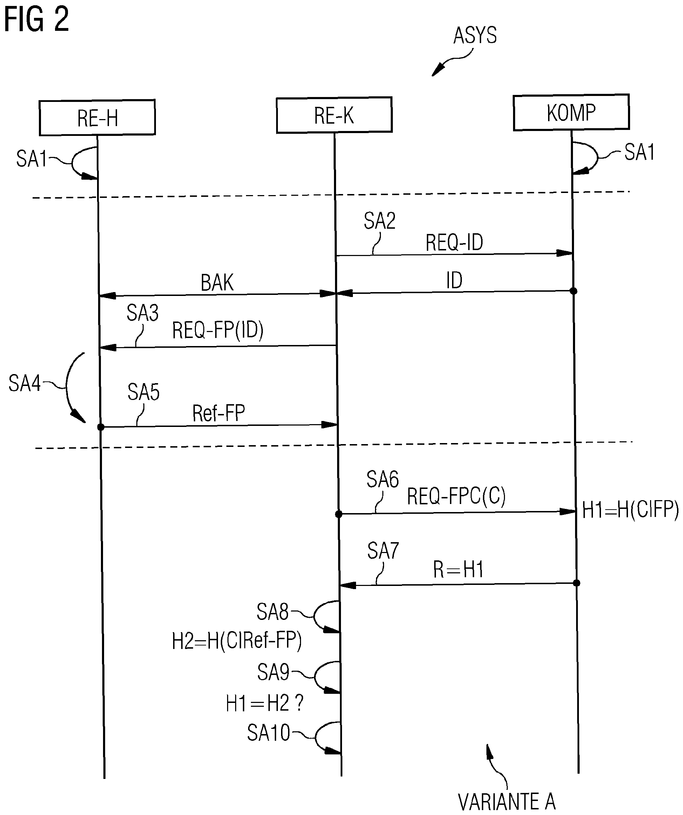

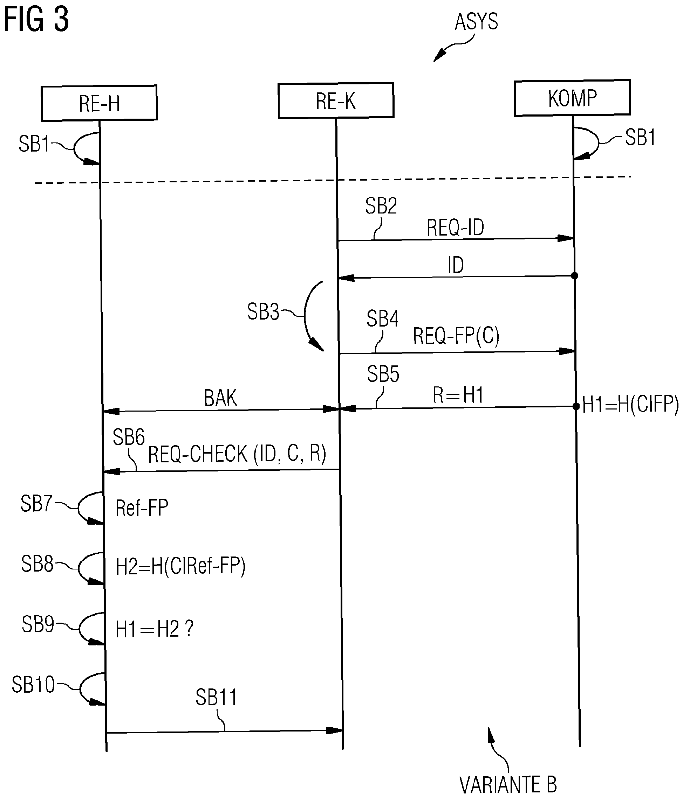

Ein Ausführungsbeispiel für die Umsetzung des Konzepts des erfindungsgemäßen Verfahrens ist in dem Ablaufdiagramm gemäß Fig.1 dargestellt. Zwei mögliche Hauptvarianten A, B des in Fig.1 dargestellten erfindungsgemäßen Verfahrens werden in den Signaldiagrammen der Figuren 2 und 3 gezeigt.

Die Erfindung schafft gemäß einem ersten Aspekt ein computer-implementiertes Verfahren zur Authentifizierung einer von einem Hersteller hergestellten elektronischen Komponente KOMP, bei dem die Komponente KOMP als von dem Hersteller stammend verifiziert wird, falls ein erster Authentifizierungstag (AT1), welcher in Abhängigkeit eines an die Komponente KOMP vergebenen Fingerprints FP und einer von einem Käufer der Komponente KOMP bereitgestellten Challenge REQ-FP (C) von einer Berechnungseinheit oder einer Berechnungsroutine der Komponente KOMP berechnet wird, mit einem zweiten Authentifizierungstag (AT2) übereinstimmt (AT1 = AT2), welcher in Abhängigkeit eines bei dem Hersteller H gespeicherten Referenz-Fingerprints Ref-FP berechnet wird, der bei der Vergabe des Fingerprints FP an die Komponente KOMP integritätsgeschützt gespeichert werden kann.

Bei einer möglichen Ausführungsform des Verfahrens wird ein Fingerprint FP nicht vergeben, sondern die Komponente KOMP enthält bereits einen individuellen Fingerprint FP.

Der Referenz-Fingerprint (Ref-FP) kann auch dem Käufer der Komponente KOMP zur Verfügung gestellt werden, der diesen Referenz-Fingerprint sicher speichert. Daraufhin ist keine Verbindung zu dem Hersteller der Komponente KOMP mehr erforderlich.

Bei einer möglichen Ausführungsform des erfindungsgemäßen Verfahrens weist das Authentifizierungstag AT einen berechneten Hashwert H auf. Bei einer möglichen Ausführungsform erfolgt ein Konkatenieren (bzw. Verketten) oder sonstiges Verknüpfen von Fingerprint FP und einer Challenge C und darauf basierend eine Hashwertberechnung eines Hashwertes H als Authentifizierungstag AT:

$$AT = H \ (C \mid FP)$$

Der dabei verwendete Algorithmus, insbesondere Hashalgorithmus H, ist abhängig von der jeweiligen Anwendung beliebig zu wählen. Beispiele dazu sind SHA-1, SHA-2, SHA-256, MD5, SHA-3 usw.

Bei einer alternativen Ausführungsform des erfindungsgemäßen Verfahrens wird der Fingerprint FP als Schlüssel verwendet und beispielsweise mithilfe eines MAC, HMAC, CMAC, GMAC oder AEAD Algorithmus ein Authentifizierungstag AT aus einer Challenge C berechnet. Die Generierung der Response R kann mit einem MAC, HMAC, GAMC oder ein AEAD-Algorithmus (AEAD Authenticated Encryption with Associated Data) erfolgen. Hier kann der Fingerprint (z.B. FP und Ref-FP) als Schlüssel verwendet und eine Challenge C als Eingangsdaten für einen solchen Algorithmus verwendet werden:

$$AT = MAC \ (C; \ FP)$$

Allgemein wird ein erstes Authentisierungstag AT1 und ein zweites Authentifizierungstag AT2 in Abhängigkeit einer Challenge C und eines Fingerprints (FP oder Ref-FP) mit Hilfe eines Berechnungsalgorithmus B berechnet:

$$AT1 = B \ (C; \ FP)$$

$$AT2 = B(C; \ Ref\text{-}FP)$$

Der erste Authentifizierungstag (AT1), insbesondere der erste Hashwert H1 oder der erste MAC- Authentifizierungstag (MAC1), wird hierbei vorzugsweise in einem Challenge-Response-Verfahren von der Komponente KOMP als Response R zu einer empfangenen Challenge C ausgegeben, die mit dem von dem Hersteller an die Komponente KOMP vergebenen Fingerprint FP verknüpft wird. Die von dem Käufer der Komponente KOMP stammende Challenge C wird vorzugsweise nur einmalig verwendet.

Die Erfindung schafft bei einer bevorzugten Ausführungsform ein computer-implementiertes Verfahren zur Authentifizierung einer von einem Hersteller hergestellten elektronischen Komponente KOMP mit den mehreren Hauptschritten, wie sie in dem Ablaufdiagramm von Fig. 1 dargestellt sind.

In einem ersten Schritt S1 des erfindungsgemäßen Verfahrens erfolgt ein Vergeben (S1; SA1; SB1) einer eindeutigen Identifizierung (ID) und eines zugehörigen individuellen Fingerprints (FP) für eine hergestellte elektronische Komponente KOMP durch eine Recheneinheit des Herstellers (RE-H) der elektronischen Komponente KOMP. Der für die hergestellte Komponente KOMP vergebene zugehörige individuelle Fingerprint (FP) wird integritätsgeschützt und vertrauensgeschützt in die hergestellte Komponente KOMP eingebracht und in einer Datenbank (DB-H) oder sonstigen Speichereinheit des Herstellers als Referenz-Fingerprint (Ref-FP) gespeichert.

Bei der Variante A des erfindungsgemäßen Verfahrens entspricht der im Ablaufdiagramm der Fig.1 dargestellte Schritt S1 dem Schritt SA1, welcher in dem Signalablaufdiagramm von Fig.2 dargestellt ist.

Bei der Variante B des erfindungsgemäßen Verfahrens entspricht der im Ablaufdiagramm der Fig. 1 dargestellte Schritt S1 dem Schritt SB1, welcher in dem Signalablaufdiagramm von Fig.3 dargestellt ist.

Die in den Figuren 2, 3 dargestellten Ausführungsvarianten A, B können auch miteinander kombiniert werden.

Während der Herstellung einer Komponente KOMP vergibt der Hersteller der elektronischen Komponente KOMP bei einer möglichen Ausführungsform in dem ersten Schritt S1 (SA1; SB1) eine eindeutige Identität (ID) sowie einen individuellen Fingerprint (FP) bzw. einen individuellen digitalen Fingerabdruck für jede von ihm hergestellte Komponente KOMP. Die Identität (ID) der elektronischen Komponente KOMP ist öffentlich und dient dazu, die hergestellte elektronische Komponente KOMP eindeutig zu identifizieren.

Der Fingerprint FP wird im Rahmen des erfindungsgemäßen Verfahrens zur Authentisierung, Authentifizierung und Originalitätsprüfung der zugehörigen elektrischen Komponente KOMP verwendet. Der an die Komponente KOMP im Schritt S1 (bzw. SA1; SB1) vergebene Fingerprint FP kann nicht ausgelesen werden.

Der Fingerprint FP kann während der Herstellung der Komponente KOMP als eine Random Zahl bzw. als Zufallszahl generiert und auf die Komponente KOMP im Schritt S1 (bzw. SA1; SB1) aufgespielt werden. Der an die elektronische Komponente KOMP im Schritt S1 vergebene Fingerprint FP ist integer und vertraulich. Der Fingerprint FP kann z.B. in dem Firmware-Code der elektronischen Komponente KOMP integriert werden, der für den Benutzer nicht sichtbar ist.

Unabhängig von der Methode zur Generierung und Speicherung des Komponenten-Fingerprints FP ist es erfindungsgemäß wichtig, den resultierenden Fingerprint FP beim Hersteller in dessen Datenbank DB-H oder an anderer Stelle als Referenz-Fingerprint (Ref-FP) geschützt derart zu speichern, dass stets die Integrität und Vertraulichkeit gewährleistet sind. Ebenso wird die zugehörige Identität ID der elektronischen Komponente KOMP vorzugsweise integritätsgeschützt beim Hersteller der Komponente KOMP gespeichert.

Vorzugsweise ist der Komponenten-Fingerprint FP nur während der Herstellung in Klartext auslesbar. Später, wenn die elektronische Komponente KOMP ausgeliefert worden ist und zum Einsatz kommt, kann der Fingerprint FP der elektronischen Komponente KOMP nur in einer geschützten Form - beispielsweise im Rahmen eines Challenge-Response-Protokolls - ausgelesen werden.

In einem weiteren Schritt S2 erfolgt ein Abfragen (Fig.1 S2; Fig.2 SA2; Fig.3 SB2) der eindeutigen Identifizierung (ID) der elektronischen Komponente KOMP durch eine Recheneinheit eines Käufers (RE-K) der elektronischen Komponente KOMP, welcher die elektronische Komponente KOMP von dessen Hersteller über eine Lieferkette erhalten hat.

In einem weiteren Schritt S3 erfolgt ein Übertragen (Fig.1 S3; Fig.2 SA6; Fig.3 SB4) einer generierten Challenge (C) durch die Recheneinheit des Käufers (RE-K) an die elektronische Komponente KOMP. Die Komponente KOMP verknüpft die erhaltene Challenge (C) mit dem integritätsgeschützten Fingerprint (FP) zu einem Verknüpfungswert bzw. zu einer Verknüpfungszeichenfolge und berechnet mit Hilfe einer Hashfunktion oder einer sonstigen nicht umkehrbaren Funktion basierend auf dem gebildeten Verknüpfungswert einen zu dem Fingerprint (FP) zugehörigen ersten Authentifizierungstag (AT1), insbesondere einen ersten Hashwert (H1) oder einen ersten MAC-Authentifizierungstag (MAC1) mit dem Fingerprint FP als Schlüssel. Die Verknüpfung besteht vorzugsweise aus einer Verkettung der Werte bzw. Zeichenfolgen in einer bestimmten Reihenfolge, beispielsweise Challenge C| Fingerprint FP, wobei das Zeichen | für die Verkettung verwendet wird. Die Verknüpfung kann auch eine logische Verknüpfung der Werte aufweisen, beispielsweise eine XOR-verknüpfung der Werte. Der erste Authentifizierungstag AT1 kann im Schritt S3 (SA6; SB4) mit einem auswählbaren Berechnungsalgorithmus bzw. Berechnungsfunktion B durch eine Berechnungseinheit bzw. Berechnungsroutine der Komponente KOMP berechnet werden:

$$AT1 = B \ (C; \ FP)$$

Bei einer möglichen Ausführungsform wird als erster Authentifizierungstag AT1 ein erster Hashwert H1 mit Hilfe eines Hashwert-Berechnungsalgorithmus berechnet:

$$H1 = H \ (C \ | \ FP)$$

wobei die Challenge C mit dem Fingerprint FP verkettet wird.

Alternativ kann die Challenge C auch in anderer Weise mit dem Fingerprint FP verknüpft werden, beispielsweise in eine logischen XOR-Verknüpfung:

$$H1 = H \ (C \ xor \ FP)$$

Alternativ kann als erster Authentifizierungstag AT1 auch ein erster MAC-Wert MAC1 mit dem Fingerprint FP als Schlüssel und der Challenge C als Eingangswert berechnet werden:

$$MAC1 = MAC \ (C; \ FP)$$

In einem weiteren Schritt S4 erfolgt ein Übertragen (S4; SA7; SB5) des zu dem Fingerprint (FP) gehörigen berechneten ersten Authentifizierungstags (AT1), beispielsweise eines ersten berechneten Hashwertes (H1) oder ersten berechneten MAC-Wert (MAC1), als Response (R) von der elektronischen Komponente KOMP über eine Schnittstelle zu der Recheneinheit des Käufers (RE-K) und/oder zu der Recheneinheit (RE) des Herstellers (RE-H). Dies kann über eine drahtlose oder drahtgebundene Schnittstelle zwischen der Recheneinheit (RE) und der Komponente (KOMP) und/oder über ein Datennetzwerk erfolgen.

In einem weiteren Schritt S5 erfolgt ein Berechnen (S5; SA8; SB8) durch die Recheneinheit des Käufers (RE-K) und/oder durch die Recheneinheit (RE) des Herstellers (RE-H) eines zweiten Authentifizierungstags (AT2), beispielsweise eines zweiten Hashwertes (H2) oder eines zweiten MAC-Wertes(MAC2), basierend auf einem Verknüpfungswert, welcher durch Verknüpfung der Challenge (C) mit dem aus der Datenbank des Herstellers (DB-H) ausgelesenen Referenz-Fingerprint (Ref-FP) gebildet wird. Die Verknüpfung besteht vorzugsweise in einer Verkettung der Challenge C mit dem ausgelesenen Referenz-Fingerprint Ref-FP (C | Ref-FP). Die Reihenfolge der Verkettung kann bei verschiedenen Implementierungen des Verfahrens variieren. Andersartige arithmetische oder logische Verknüpfungen der zugrundeliegenden Werte C, Ref-FP sind möglich. Ebenso ist es möglich einen bestimmten Berechnungsalgorithmus B zur Berechnung des Authentifizierungstags AT, insbesondere einen beliebigen Hash-Algorithmus bzw. MAC-Algorithmus, zu verwenden. Jedoch muss derselbe Berechnungsalgorithmus B bei der elektronischen Komponente KOMP und bei der Recheneinheit des Käufers (RE-K) verwendet werden, um denselben Authentifizierungstag AT, in besondere denselben Hashwert H oder denselben MAC-Wert MAC, für die Verifikation daraus zu erhalten bzw. um AT1=AT2 bzw. H1=H2 bzw. MAC1=MAC2 für dieselbe Challenge C und FP=REF-FP zu bekommen.

Der zweite Authentifizierungstag (AT2) wird im Schritt S5 (SA8; SB8) mit Hilfe eines geeigneten Berechnungsalgorithmus durch einen Prozessor der Recheneinheit RE berechnet.

$$AT2 = B \ (C; \ Ref\text{-}FP)$$

Bei einer möglichen Ausführungsform wird als zweiter Authentifizierungstag AT2 ein zweiter Hashwert (H2) mittels eines Hashwert-Berechnungsalgorithmus berechnet:

$$H2 = H \ (C| \ Ref\text{-}FP)$$

wobei die Challenge C und der Referenz-Fingerprint Ref-FP bei einer möglichen Ausführungsform miteinander verkettet sind (C | Ref-FP).

Alternativ kann die Challenge C und der Referenz-Fingerprint Ref-FP auch in anderer Weise miteinander verknüpft werden, beispielsweise in einer XOR-Verknüpfung:

$$H2 = H \ (C \ xor \ Ref\text{-}FP)$$

Alternativ kann bei einer weiteren Ausführungsform als zweiter Authentifizierungstag AT2 ein zweiter MAC-Wert (MAC2) berechnet, wobei der Referenz-Fingerprint Ref-FP als Schlüssel verwendet wird:

$$MAC2 = MAC \ (C; \ Ref\text{-}FP)$$

Dabei erfolgt die Berechnung des zweiten Authentifizierungstags (AT2), insbesondere des zweiten Hashwertes (H2) oder des zweiten MAC-Wertes (MAC2), bei der in Fig.2 dargestellten ersten Variante A des erfindungsgemäßen Verfahrens im Schritt SA8 durch die Recheneinheit RE-K des Käufers und bei der in Fig.3 dargestellten zweiten Variante B des erfindungsgemäßen Verfahrens im Schritt SB8 durch die Recheneinheit RE-H des Herstellers.

Ein Authentifizierungstag AT wird bei einer weiteren möglichen Ausführungsform vorzugsweise mit einem symmetrischen AEAD Algorithmus berechnet. Beispiele für AEAD-Algorithmen sind AES-GCM, und ASCON.

$$AT1 = AEAD\ (C;\ FP)$$

$$AT2 = AEAD\ (C;\ Ref\text{-}FP)$$

Ein Hashwert H wird bei einer möglichen Ausführungsform mit einem Hash-Algorithmus berechnet und kann als Authentifizierungstag verwendet werden.

Ein MAC-Wert wird bei einer möglichen Ausführungsform mit einem MAC/CMAC/HMAC/GMAC Algorithmus berechnet und kann als Authentifizierungstag verwendet werden.

In einem weiteren Schritt S6 erfolgt ein Vergleichen (S6; SA9; SB9) des ersten Authentifizierungstags (AT1), insbesondere des ersten Hashwertes H1 bzw. des ersten MAC-Wertes (MAC1), mit dem zweiten Authentifizierungstag (AT2), insbesondere mit dem zweiten Hashwert (H2) bzw. mit dem zweiten MAC-Wert (MAC2), durch die Recheneinheit des Käufers (RE-K) und/oder durch die Recheneinheit des Herstellers (RE-H) des von der elektronischen Komponente KOMP als Response (R) erhaltenen ersten Authentifizierungstags (AT1), insbesondere des erhaltenen ersten Hashwertes (H1) oder des erhaltenen ersten MAC-Wertes (MAC1), mit dem berechneten zweiten Authentifizierungstag (AT2), insbesondere dem berechneten zweiten Hashwert (H2) oder dem berechneten zweiten MAC-Wert (MAC2).

Dabei erfolgt das Vergleichen des ersten Authentifizierungstags (AT1) mit dem zweiten Authentifizierungstag (AT2) bei der in Fig.2 dargestellten ersten Variante A des erfindungsgemäßen Verfahrens im Schritt SA9 durch die Recheneinheit RE-K des Käufers K und bei der in Fig.3 dargestellten zweiten Variante B des erfindungsgemäßen Verfahrens im Schritt SB9 durch die Recheneinheit RE-H des Herstellers.

In einem weiteren Schritt S7 (Fig.1) erfolgt ein Verifizieren (S7; SA10; SB10) der Authentizität der elektronischen Komponente KOMP, falls die beiden durch die Recheneinheit des Käufers (RE-K) und/oder durch die Recheneinheit des Herstellers (RE-H) miteinander verglichenen Authentifizierungstag (AT1, AT2), insbesondere die miteinander verglichenen Hashwerte (H1, H2) oder die miteinander verglichenen MAC-Werte (MAC1, MAC2), übereinstimmen (AT1=A2; H1=H2; MAC1=MAC2).

Dabei erfolgt die Verifikation bei der in Fig.2 dargestellten ersten Variante A des erfindungsgemäßen Verfahrens im Schritt SA10 durch die Recheneinheit RE-K des Käufers K und bei der in Fig.3 dargestellten zweiten Variante B des erfindungsgemäßen Verfahrens im Schritt SB10 durch die Recheneinheit RE-H des Herstellers H.

Bei der in Fig. 3 dargestellten zweiten Variante B kann die Recheneinheit RE-H des Herstellers das Ergebnis der Verifikation im Schritt SB11 an die Recheneinheit RE-K des Käufers melden. Die Recheneinheit RE-K des Käufers hat vorzugsweise eine Nutzerschnittstelle, welche dem Nutzer bzw. Käufer anzeigt, ob die betreffende Komponente KOMP erfolgreich als von dem Hersteller stammend verifiziert worden ist.

Ferner kann das Ergebnis der Verifikation eine Fehlerbehandlungsroutine automatisch triggern. Beispielsweise wird eine als nicht authentisch erkannte Komponente KOMP bei einem Montagevorgang eines Gerätes nicht in das betreffende Gerät eingebaut bzw. aussortiert.

Bei einer möglichen Ausführungsform des Verfahren zur Authentifizierung einer von einem Hersteller hergestellten elektronischen Komponente KOMP erfolgt in der in Fig.2 dargestellten ersten Variante A ein Senden (SA3) der abgefragten (S2) eindeutigen Identifizierung (ID) der elektronischen Komponente KOMP über einen sicheren Kommunikationskanal BAK an die Recheneinheit des Herstellers (RE-H) der elektronischen Komponente KOMP zur Anforderung (REQ-FP (ID)) des zugehörigen individuellen Fingerprints FP der ausgelieferten elektronischen Komponente KOMP.

Bei einer möglichen Ausführungsform des Verfahren zur Authentifizierung einer von einem Hersteller hergestellten elektronischen Komponente KOMP erfolgt anschließend in der in Fig.2 dargestellten ersten Variante (A) des Verfahrens ein Auslesen (SA4) des zugehörigen Referenz-Fingerprints (Ref-FP) aus der integritätsgeschützten Datenbank (DB-H) des Herstellers anhand des von der Recheneinheit des Herstellers (RE-H) über den sicheren Kommunikationskanal BAK von der Recheneinheit des Käufers (RE-K) der elektronischen Komponente KOMP empfangenen eindeutigen Identifizierung (ID) der elektronischen Komponente KOMP.

Bei einer möglichen Ausführungsform des Verfahren zur Authentifizierung einer von einem Hersteller hergestellten elektronischen Komponente KOMP erfolgt anschließend in der ersten Variante (A) des Verfahren ein Senden (SA5) des aus der integritätsgeschützten Datenbank des Herstellers (DB-H) der elektronischen Komponente KOMP ausgelesenen Referenz-Fingerprints (FP) durch die Recheneinheit des Herstellers (RE-H) über den sicheren Kommunikationskanal BAK an die Recheneinheit des Käufers (RE-K) der elektronischen Komponente KOMP, wobei der übermittelte Referenz-Fingerprint Ref-FP in der Recheneinheit des Käufers (RE-K) zur weiteren Auswertung gespeichert wird.

Bei einer möglichen Ausführungsform des Verfahren zur Authentifizierung einer von einem Hersteller hergestellten elektronischen Komponente erfolgt in einer zweiten Variante (B) des Verfahrens ein Speichern (SB3) der abgefragten (S2) eindeutigen Identifizierung (ID) der elektronischen Komponente KOMP in einem Speicher der Recheneinheit des Käufers (RE-K), wie in dem Signaldiagramm der Fig.3 dargestellt ist.

Bei einer möglichen Ausführungsform des Verfahren zur Authentifizierung einer von einem Hersteller hergestellten elektronischen Komponente erfolgt in der in Fig.3 dargestellten zweiten Variante (B) des Verfahrens ein Senden (SB6) durch die Recheneinheit des Käufers (RE-K) der von der elektronischen Komponente KOMP abgefragten und gespeicherten (SB3) eindeutigen Identifizierung (ID) der elektronischen Komponente KOMP zusammen mit der Challenge (C) und zusammen mit dem von der elektronischen Komponente KOMP als Response ( R) erhaltenen ersten Authentifizierungstag (AT1), insbesondere dem ersten Hashwert (H1), über einen sicheren Kommunikationskanal BAK an die Recheneinheit des Herstellers (RE-H) der elektronischen Komponente KOMP zur Anforderung einer Verifizierung der Komponente KOMP durch die Recheneinheit des Herstellers (RE-H).

Bei einer möglichen Ausführungsform des Verfahren zur Authentifizierung einer von einem Hersteller H hergestellten elektronischen Komponente KOMP erfolgt in der in Fig.3 dargestellten zweiten Variante (B) ein Auslesen (SB7) des zugehörigen Referenz-Fingerprints (Ref-FP) aus der integritätsgeschützten Datenbank (DB-H) des Herstellers anhand des von der Recheneinheit des Herstellers (RE-H) über den sicheren Kommunikationskanal BAK von der Recheneinheit des Käufers (RE-K) empfangenen eindeutigen Identifizierung (ID) der elektronischen Komponente KOMP.

Bei einer möglichen Ausführungsform des Verfahren zur Authentifizierung einer von einem Hersteller hergestellten elektronischen Komponente wird die durch die Recheneinheit des Käufers (RE-K) an die elektronische Komponente im Schritt S3 übertragene (S3; SA6; SB4) Challenge (C) mit dem integritätsgeschützten Fingerprint (FP) zur Bildung eines Verknüpfungswert verkettet und basierend auf dem gebildeten Verknüpfungswert wird der zu dem Fingerprint (FP) zugehörige erste Authentifizierungstag (AT1), insbesondere erste Hashwert (H1), berechnet.

Bei einer möglichen Ausführungsform des Verfahren zur Authentifizierung einer von einem Hersteller hergestellten elektronischen Komponente KOMP weist der individuelle Fingerprint (FP) für eine hergestellte elektronische Komponente KOMP eine generierte Zufallszahl auf.

Bei einer alternativen möglichen Ausführungsform des Verfahren zur Authentifizierung einer von einem Hersteller hergestellten elektronischen Komponente KOMP weist der individuelle Fingerprint (FP) für eine hergestellte elektronische Komponente KOMP einen hardwarespezifischen Fingerprint auf, der mittels einer PUF (Physical Unclonable Function) aus den physikalischen Eigenschaften und Herstellungsvariationen der elektronischen Komponente KOMP erzeugt wird.

Bei einer weiteren möglichen Ausführungsform des Verfahren zur Authentifizierung einer von einem Hersteller hergestellten elektronischen Komponente KOMP wird der individuelle Fingerprint (FP) für eine hergestellte elektronische Komponente KOMP in einem Firmware-Code der Komponenten KOMP integritätsgeschützt integriert und/oder in einem Datenspeicher der Komponente KOMP integritätsgeschützt.

Bei einer möglichen Ausführungsform des Verfahren zur Authentifizierung einer von einem Hersteller hergestellten elektronischen Komponente KOMP weist der zwischen der Recheneinheit des Herstellers (RE-H) und der Recheneinheit des Käufers (RE-K) bestehende sichere Kommunikationskanal BAK einen beidseitig authentisierten Kanal auf.

Bei einer weiteren möglichen Ausführungsform des Verfahren zur Authentifizierung einer von einem Hersteller hergestellten elektronischen Komponente KOMP wird die Challenge (C) durch einen Random-Zahlengenerator oder durch einen Zähler der Recheneinheit des Käufers (RE-K) generiert. Mit einer generierten Zufallszahl bzw. Random-Zahl wird die sogenannte Freshness-Eigenschaft in diesem Kontext garantiert. Der verwendete Zähler kann vorzugsweise nur hoch oder runter zählen damit jeder von ihm generierte Zählerwert nur einmal vorkommen kann.

Bei einer möglichen Ausführungsform des Verfahren zur Authentifizierung einer von einem Hersteller hergestellten elektronischen Komponente KOMP wird jede generierte Challenge (C ) nur einmal verwendet. Hierdurch werden Replay-Angriffe abgewehrt.

Bei einer möglichen Ausführungsform des Verfahren zur Authentifizierung einer von einem Hersteller hergestellten elektronischen Komponente ist die elektronische Komponente KOMP als Bauteil in einem Gerät des Käufers K verbaut oder weist eine eigenständige Komponente auf.

Bei einer möglichen Ausführungsform des Verfahren zur Authentifizierung einer von einem Hersteller hergestellten elektronischen Komponente weist die elektronische Komponente KOMP eine Feld-Komponente mit beschränkter Rechenleistung und beschränkter Speicherkapazität auf.

Die Erfindung schafft ferner gemäß einem weiteren Aspekt ein System ASYS zur Authentifizierung einer von einem Hersteller hergestellten elektronischen Komponente KOMP.

Das Authentifizierungssystem ASYS umfasst eine Recheneinheit des Herstellers (RE-H) der elektronischen Komponente KOMP. Die Recheneinheit des Herstellers (RE-H) ist dazu ausgelegt, eine eindeutige Identifizierung (ID) und einen zugehörigen individuellen Fingerprint (FP) für die von dem Hersteller hergestellte elektronische Komponente KOMP zu vergeben (S1; SA1; SB1). Dabei wird der für die hergestellte Komponente KOMP vergebene zugehörige individuelle Fingerprint (FP) integritätsgeschützt und vertrauensgeschützt in die hergestellte Komponente KOMP eingebracht und in einer Datenbank (DB-H) des Herstellers als Referenz-Fingerprint (Ref-FP) vertraulich und integritätsgeschützt gespeichert.

Das Authentifizierungssystem ASYS umfasst eine Recheneinheit eines Käufers (RE-K) der elektronischen Komponente KOMP, welcher die elektronische Komponente KOMP von dessen Hersteller über eine Lieferkette erhalten hat. Die Recheneinheit eines Käufers (RE-K) der elektronischen Komponente KOMP ist dazu ausgelegt, die eindeutige Identifizierung (ID) der elektronischen Komponente KOMP abzufragen (S2; SA2; SB2). Recheneinheit eines Käufers (RE-K) der elektronischen Komponente KOMP ist zudem dazu ausgelegt, eine Challenge (C) an die elektronische Komponente KOMP zu übertragen (S3; SA6; SB4).

Die elektronische Komponente KOMP weist eine integrierte Berechnungseinheit oder eine integrierte Berechnungsroutine auf, welche dazu ausgelegt ist, die von der Recheneinheit des Käufers (RE-K) erhaltene Challenge (C) mit dem in ihr eingebrachten integritätsgeschützten Fingerprint (FP) zu einem Verknüpfungswert zu verknüpfen und basierend auf dem gebildeten Verknüpfungswert einen zu dem Fingerprint (FP) zugehörigen ersten Authentifizierungstag (AT1), insbesondere einen ersten Hashwert (H1), zu berechnen. Die elektronische Komponente KOMP kann diesen ersten Authentifizierungstag (AT1), insbesondere den ersten Hashwert (H1), als Response (R) zu der Recheneinheit des Käufers (RE-K) und/oder zu der Recheneinheit (RE) des Herstellers (RE-H) übertragen (S4; SA7; SB5).

Die Recheneinheit des Käufers (RE-K) und/oder die Recheneinheit (RE) des Herstellers (RE-H) ist dazu ausgelegt, einen zweiten Authentifizierungstag (AT2), insbesondere einen zweiten Hashwert (H2), basierend auf einem Verknüpfungswert, welcher durch Verknüpfung der Challenge (C) mit dem aus der Datenbank des Herstellers (DB-H) ausgelesenen Referenz-Fingerprint (Ref-FP) gebildet wird, zu berechnen (S5; SA8; SB8). Die Recheneinheit des Käufers (RE-K) und/oder die Recheneinheit (RE) des Herstellers (RE-H) sind zudem dazu ausgelegt, die Authentizität der elektronischen Komponente KOMP zu verifizieren (S7; SA10; SB10), falls die beiden durch die Recheneinheit des Käufers (RE-K) und/oder durch die Recheneinheit des Herstellers (RE-H) miteinander verglichenen (S6; SA9; SB9) Authentifizierungstags ATs, insbesondere Hashwerte (H1, H2) oder MAC-Werte (MAC1, MAC2), übereinstimmen (AT1 = AT2).

Bei einer möglichen Ausführungsform des Authentifizierungssystems ASYS zur Authentifizierung einer von einem Hersteller hergestellten elektronischen Komponente KOMP wird zwischen der Recheneinheit des Herstellers (RE-H) und der Recheneinheit des Käufers (RE-K) ein sicherer Kommunikationskanal BAK aufgebaut.

Die Erfindung schafft ferner gemäß einem weiteren Aspekt eine Recheneinheit (RE) für ein Authentifizierungssystem ASYS zur Authentifizierung einer von einem Hersteller hergestellten elektronischen Komponente KOMP.

Die Recheneinheit (RE) des Authentifizierungssystems ist dazu ausgelegt, die eindeutige Identifizierung (ID) der elektronischen Komponente KOMP über eine Schnittstelle abzufragen (S2; SA2; SB2). Die Recheneinheit (RE) ist ferner dazu ausgelegt, eine generierte Challenge (C) an die elektronische Komponente KOMP zu übertragen (S3; SA6; SB4) und einen ersten Authentifizierungstag (AT1), insbesondere einen ersten Hashwert (H1) oder einen ersten MAC-Wert (MAC1), als Response (R) von der elektronischen Komponente KOMP zu erhalten (S4; SA7; SB5).

Die Recheneinheit (RE) des Authentifizierungssystems ASYS ist zudem dazu ausgelegt, einen zweiten Authentifizierungstag (AT2), insbesondere einen zweiten Hashwert (H2) oder einen zweiten MAC-Wert (MAC2), basierend auf einem Verknüpfungswert, welcher durch Verknüpfung der lokal generierten Challenge (C) mit dem aus einer Datenbank des Herstellers (DB-H) ausgelesenen Referenz-Fingerprint (Ref-FP) gebildet wird, zu berechnen (S5; SA8; SB8).

Die Recheneinheit (RE) des Authentifizierungssystems ASYS ist ferner dazu ausgelegt ist, die Authentizität der elektronischen Komponente KOMP zu verifizieren (S7; SA10; SB10), falls die beiden durch die Recheneinheit (RE) miteinander verglichenen (S6; SA9; SB9) Authentifizierungstags (AT1, AT2), insbesondere Hashwerte (H1, H2) oder MAC-Werte (MAC1, MAC2) übereinstimmen.

Das Authentifizierungssystem ASYS kann einen Teil einer Automatisierungsanlage oder einer Produktionsanlage zur Herstellung oder Montage von Geräten bilden.

Die Erfindung schafft ferner gemäß einem weiteren Aspekt eine elektronische Komponente KOMP, die durch ein erfindungsgemäßes Authentifizierungssystem ASYS verifizierbar ist.

Die elektronische Komponente KOMP weist eine integrierte Berechnungseinheit oder eine integrierte Berechnungsroutine auf, welche dazu ausgelegt ist, eine von einer Recheneinheit (RE) des Authentifizierungssystems ASYS erhaltene Challenge (C) mit dem in der elektronischen Komponente KOMP enthaltenen integritätsgeschützten Fingerprint (FP) zu einem Verknüpfungswert zu verknüpfen und basierend auf dem gebildeten Verknüpfungswert einen zu dem Fingerprint (FP) zugehörigen ersten Authentifizierungstag (AT1), insbesondere ersten Hashwert (H1), zu berechnen oder auf Basis des integritätsgeschützten Fingerprints (FP) als Schlüssel den ersten MAC-Wert (MAC1) als erstes Authentifizierungstag (AT1) zu berechnen.

Die elektronische Komponente KOMP weist bei einer möglichen Ausführungsform eine Hardware-komponente (HW-KOMP) auf.

Die elektronische Komponente weist bei einer weiteren möglichen Ausführungsform eine Softkomponente (SW-KOMP) auf, beispielsweise ein Steuerprogramm oder dergleichen.

Die elektronische Komponente KOMP ist dazu ausgelegt, den berechneten ersten Authentifizierungstag (AT1), insbesondere ersten Hashwert (H1) oder ersten MAC-Wert (MAC1) als Response (R) zu der anfragenden Recheneinheit (RE) des Authentifizierungssystems ASYS zu übertragen (S4; SA7; SB5). Hierzu verfügt die Komponente KOMP über eine Übertragungsschnittstelle.

Bei einer möglichen Ausführungsform der elektronischen Komponente KOMP ist die elektronische Komponente KOMP als Bauteil in einem Gerät des Käufers einbaubar bzw. bereits eingebaut.

Bei einer möglichen Ausführungsform der elektronischen Komponente KOMP ist die elektronische Komponente KOMP eine eigenständige nicht in einem anderen Gerät verbaute Komponente.

Bei einer möglichen Ausführungsform der elektronischen Komponente KOMP weist die elektronische Komponente KOMP eine Feld-Komponente mit beschränkter Rechenleistung und mit beschränkter Speicherkapazität auf. Die Komponente KOMP umfasst beispielsweise einen Sensor, einen Aktuator oder eine Speicherkomponente.

Die Erfindung schafft ferner gemäß einem weiteren Aspekt ein Gerät mit mindestens einer darin als Bauteil verbauten erfindungsgemäßen elektronischen Komponente KOMP.

Bei einer möglichen Ausführungsform des Gerätes weist das Gerät eine drahtlose oder drahtgebundene Schnittstelle zu einer Recheneinheit (RE) des Authentifizierungssystems ASYS auf.

In dem erfindungsgemäßen Authentifizierungssystem SYS, wie es schematisch in den Signaldiagrammen der Figuren 2, 3 dargestellt ist, sind drei verschiedene Parteien involviert, nämlich eine elektronische Komponente KOMP (z.B. Sensor, Aktuator, Speicher), eine Recheneinheit RE-H eines Herstellers (oder eine vertrauliche Partei des Herstellers, z.B. Server oder Authority) und eine Recheneinheit RE-K eines Käufers (User oder Betreiber) von dieser elektronischen Komponente KOMP, der die Komponente KOMP über eine Lieferkette bezogen hat und über sie verfügt.

Der Käufer möchte die Originalität, Integrität und Authentizität der sich in seinem Besitz befindlichen Komponente KOMP verifizieren. Der Käufer möchte sicher sein, dass er die elektronische Komponente KOMP von einem Hersteller, dem er vertraut, entlang der Lieferkette bezogen hat, ohne dass die Komponente durch eine Fake-Komponente bzw. ein Plagiat ersetzt worden ist.

Bei dem erfindungsgemäße Verfahren kontaktiert der Käufer der Komponente KOMP über eine seiner Recheneinheiten RE-K zunächst die von ihm gekaufte und in seinem Besitz befindliche elektronische Komponente KOMP und frägt im Schritt S2 (Fig1), SA2 (Fig.2), SB2 (Fig3) über eine Schnittstelle deren eindeutige Identität ID ab (REQ-ID). Da die Identität ID der Komponente KOMP eine öffentliche Information ist, wird die Identität ID der Komponente KOMP von dieser über die Schnittstelle ohne weitere Maßnahmen an die Recheneinheit RE-K des Käufers zurückgeschickt.

Bei einer möglichen Ausführungsform kann die Identität ID jeder Komponente KOMP während der Herstellung von dem Hersteller der Komponente KOMP signiert sein. Dann speichert die Komponente KOMP die dazugehörige Identität ID zusammen mit der Signatur des Herstellers. Jedes Mal, wenn die Identität ID angefragt wird, kann die Komponente KOMP diese Identität ID zusammen mit der Herstellersignatur zurückliefern. So können andere Parteien z.B. der Käufer der Komponente KOMP die Signatur des Herstellers über die Identität ID verifizieren, und damit die Integrität überprüfen. Außerdem kann somit auch festgestellt werden, dass diese Identität ID tatsächlich vom Hersteller der Komponente KOMP vergeben wurde.

Die Recheneinheit RE-K des Käufers baut dann bei einer möglichen Ausführungsform einen beidseitigen authentisierten Kanal BAK zu einer Recheneinheit RE-H des Herstellers der Komponente auf (z.B. TLS-Kanal), und schickt im Schritt SA3 die Identität ID dieser Komponente KOMP über den aufgebauten sicheren Kanal BAK an die Recheneinheit RE-H des Herstellers und frägt dabei nach dem Fingerprint FP dieser Komponente KOMP im Aufruf bzw. Request REQ-FP (ID).

Mithilfe der erhaltenen Identität ID der Komponente KOMP kann die Recheneinheit RE-H des Herstellers den Referenz-Fingerprint (Ref-FP) dieser Komponente KOMP in seiner geschützten Datenbank (DB-H) im Schritt SA4 identifizieren. Über den authentisierten Kanal BAK wird der Referenz-Fingerprint Ref-FP dann im Schritt SA5 non der Recheneinheit RE-H des Herstellers H zu der Recheneinheit des Käufers RE-K sicher (hinsichtlich Vertrauenswürdigkeit und Integrität) übertragen und dann bei der Recheneinheit des Käufers RE-K sicher gespeichert. Diese beiden Schritte sind hinsichtlich Integrität und Vertraulichkeit geschützt.

Nun startet in einer weiteren Phase die Integritätsüberprüfung der Komponente KOMP durch die Recheneinheit RE-K des Käufers. Dabei kann die Recheneinheit des Käufers RE-K die Originalität, Integrität und Authentizität der elektronischen Komponente KOMP verifizieren.

Bei dem erfindungsgemäßen Verfahren kann dies bei einer möglichen Ausführungsform mit einem Challenge-Response Protokoll erreicht werden. Die Recheneinheit des Käufers RE-K generiert ein Challenge C und schickt diese im Schritt SA6 an die elektronische Komponente KOMP.

Die elektronische Komponente KOMP empfängt die Challenge C und berechnet einen Authentifizierungstag AT1, insbesondere einen ersten Hashwert H1 oder einen ersten MAC-Wert (MAC1) als dazugehörige Response R:

$$H1 = H\,(C \mid FP)$$

R:=H1 bzw.

$$MAC1 = MAC (C ; FP)$$

R:= MAC1

Das Symbol "|" bezeichnet das Konkatenieren bzw. Verketten von zwei Werten, wobei die Einhaltung der korrekten Reihenfolge relevant ist.

Der dabei verwendete Algorithmus, insbesondere Hashalgorithmus H, ist abhängig von der jeweiligen Anwendung beliebig zu wählen. Beispiele dazu sind SHA-1, SHA-2, SHA-256, MD5, SHA-3 usw. Wichtig für das erfindungsgemäße Verfahren ist, dass der Fingerprint FP aus der elektronischen Komponente KOMP nur in geschützter Form ausgelesen werden kann. Für die Verifizierung wird derselbe Algorithmus verwendet.

Folglich antwortet die elektronische Komponente KOMP im Schritt SA7 auf den von der Recheneinheit des Käufers RE-K erhaltenen Challenge C mit der berechneten Response R.

Letztlich kann die Recheneinheit des Käufers RE-K bei der in Fig.2 dargestellten ersten Variante A des erfindungsgemäßen Verfahrens dieselbe Berechnung mit dem Referenz-Fingerprint Ref-FP zur Ermittlung eines zweiten Authentifizierungstag, insbesondere zweiten Hashwertes H2 oder zweiten MAC (MAC2) , durchführen nämlich:

$$H2 = H (C \mid Ref\text{-}FP)$$

bzw.

$$MAC2 = MAC (C; Ref\text{-}FP)$$

Dabei werden dieselbe Challenge C und der von der Recheneinheit des Herstellers RE-H über den sichern Kanal BAK empfangene und bei der Recheneinheit des Käufers RE-K sicher gespeicherte Referenz-Fingerprint (Ref-FP) verwendet.

Wenn der von der elektronischen Komponente KOMP als Response R empfangene erste Authentifizierungstag, insbesondere erste Hashwert H1, mit dem von der Recheneinheit des Käufers RE-K gerechneten zweiten Authentifizierungstag, insbesondere zweiten Hashwert H2 übereinstimmen (H1=H2), bzw. die beinen MAC-Werte übereinstimmen (MAC1=MAC2) kann die Recheneinheit RE-K des Käufers die Originalität, Integrität und Authentizität der elektronischen Komponente im Schritt SA 10 feststellen, weil nur diese elektronische Komponente KOMP den richtigen Fingerprint FP kennt.

Die Challenge C kann bei einer Ausführungsform des erfindungsgemäßen Verfahrens durch einen Random Zahlengenerator der Recheneinheit RE-K des Käufers generiert werden. In einer anderen Ausführungsform kann die Challenge C mit einem einfachen Zähler erzeugt werden, der nur hoch oder runter zählen kann. Die Bit-Länge des Challenge C ist je nach Anwendung beliebig wählbar. Wichtig ist, dass bei dem erfindungsgemäßen Verfahren eine generierte Challenge C nur einmal verwendet wird, um Replay-Attacken zu verhindern.

In einer möglichen Ausführungsform des erfindungsgemäßen Verfahrens kann die Identität ID einer Komponente KOMP als der gerechnete Hashwert H des Fingerprint FP erzeugt werden.

In dem Ausführungsbeispiel gemäß Fig.2 kann die der Komponente KOMP zugewiesene bzw. an sie vergebene Identität ID beispielsweise wie folgt lauten:
ID = Hash (Fingerprint)

Der Fingerprint FP kann vor der Hashwertberechnung auch mit einem Wert verkettet werden, beispielweise mit dem Wert 1:

$$ID = Hash (1 \mid Fingerprint).$$

In diesem Fall ist es wichtig die Reihenfolge des Verkettens der beiden Werte für die Berechnung des Response R konsistent zu verwenden, also z.B. immer:

$$Response\ R = Hash\ H (Challenge \mid Fingerprint).$$

In einer weiteren Ausführungsform des erfindungsgemäßen Verfahrens kann der Fingerprint FP der elektronischen Komponente KOMP mithilfe einer PUF aus den physikalischen Eigenschaften und Herstellungsvariationen der Komponente KOMP erzeugt werden.

Der Schutz für die Integrität und Vertraulichkeit des Fingerprints FP auf der Komponente KOMP kann durch eine Hartkodierung erreicht werden, so dass ein Angreifer keinen direkten Zugriff auf diesen Komponentencode hat. Andere Speichermöglichkeiten sind nicht ausgeschlossen. Wichtig ist in jedem Fall die Integrität und Vertraulichkeit für die Speicherung des Fingerprints FP auf der elektronischen Komponente KOMP zu gewährleisten.

Die verwendete Hashfunktion H reduziert eine Datenmenge auf eine kleinere Zeichenfolge, d.h. der berechnete Hashwert ist vorzugsweise kürzer und kompakter als der Originalwert bzw. der Verknüpfungswert, beispielsweise kürzer als die Verkettung aus Challenge C und Fingerprint FP.

Die Hashberechnung für die Generierung der Response R und für die Überprüfung kann bei einer weiteren Ausführungsform des erfindungsgemäßen Verfahrens mit einem MAC, HMAC, oder ein AEAD-Algorithmus (AEAD Authenticated Encryption with Associated Data) ersetzt werden. Hier können der Fingerprint (z.B. FP und Ref-FP) beispielsweise als Schlüssel verwendet und der Challenge C als Eingangsdaten für solche Algorithmen verwendet werden.

Der bei dem erfindungsgemäße Verfahren verwendete Hashalgorithmus bzw. sonstige Algorithmus richtet sich nach den verfügbaren Rechenressourcen der Komponente KOMP.

Die Verifikation kann beim Käufer entweder direkt auf dem Gerät, auf dem die Komponente KOMP als Bauteil integriert ist, oder auf einem anderen Gerät beim Käufer (z.B. Backend) erfolgen.

Bei der zweiten Hauptvariante B des erfindungsgemäßen Verfahrens, wie sie in Fig. 3 schematisch dargestellt ist, muss der Referenz-Fingerprint Ref-FP nicht an die Recheneinheit RE-K des Käufers K weitergegeben werden. Dafür erfolgt die Verifizierung der Originalität, Integrität und Authentizität der elektronischen Komponente KOMP auf der Recheneinheit RE-H des Herstellers. Die Eingangsdaten sowie das Ergebnis der Verifikation werden vom Hersteller dann über einen sicheren Kanal BAK im Schritt SB11 an die Recheneinheit RE-K des Käufers übermittelt.

Dabei müssen die Eingangsdaten für die Verifizierung von der Recheneinheit des Käufers RE-K zuvor aus der elektronischen Komponente KOMP über eine Schnittstelle ausgelesen werden und die folgenden Informationen beinhalten: Die Identität ID der Komponente KOMP, die zuletzt verwendete Challenge C, sowie die dazugehörige Response R.

Die Verifikation der Authentizität der Komponente KOMP kann auch von irgendeiner anderen vertrauenswürdigen Instanz erfolgen, die über die Identität ID der Komponente KOMP und den zugehörigen geheimen Referenz-Fingerprint Ref-FP verfügt.

Die Komponente KOMP muss in einem IoT-Gerät nicht zwingendermaßen eine HW-Komponente sein. Realisierbar ist das erfindungsgemäße Konzept auch für SW-Komponenten.

Die Komponente KOMP kann auch ein IoT-Gerät oder eine darin verbaute Komponente KOMP sein, die sich mit Hilfe des erfindungsgemäßen Verfahrens gegenüber einer anderen Partei authentifiziert.

Bei einer weiteren Ausführungsform kann der Käufer ein Geräte-Hersteller sein, welcher die von dem Komponenten-Hersteller H über eine Lieferkette bezogene Komponente KOMP in einem von ihm hergestellten Gerät integriert. In diesem Fall kann der Gerätehersteller den Referenz-Fingerprint Ref-FP in dem Gerät sicher speichern (z.B. geschützt und nicht auslesbar im Secure Element). Die obengenannte Verifizierung der Komponente KOMP erfolgt dann mit Hilfe des erfindungsgemäßen Verfahrens intern in dem jeweiligen Gerät.

Bei einer weiteren Ausführungsform kann der Hersteller ein Geräte-Hersteller sein, der den Fingerprint FP für die Komponenten KOMP generiert und in dem Gerät als Referenz-Fingerprint (Ref-FP) sicher speichert (z.B. geschützt und nicht auslesbar im Secure Element). Der Käufer kann daraufhin die Verifikation der Komponente KOMP auf dem Gerät mithilfe des Secure-Elements vornehmen. Der Käufer hat dabei keinen Zugriff auf dem Referenz-Fingerprint Ref-FP im Klartext. Das Secure-Element kann jedoch die Verifikation gemäß dem Konzept des erfindungsgemäßen Verfahrens ausführen und das Ergebnis der Verifikation bereitstellen.

Bei einer anderen Variante kann die Recheneinheit RE-H des Herstellers an einer Stelle der Protokolle mit einem Server oder vertrauliche Authority ersetzt werden, die nur für die Verifizierungen verantwortlich ist.

Die verschiedenen Varianten des erfindungsgemäßen Verfahrens und des erfindungsgemäßen Authentifizierungssystems können nach einem erfolgreichen Durchlauf folgendes sicherstellen.

Authentisierung der Komponente:
Die Komponente KOMP ist nur dann der Lage die richtige Response R zu errechnen, wenn der Fingerprint (FP) mit dem Referenz-Fingerprint (Ref-FP) vom vertrauenswürdigen Hersteller übereinstimmt.

Schutz gegenüber Replay-Attacken:
Die Komponente KOMP ist nur dann in der Lage die richtige Response R zu erzeugen, wenn die korrekte und frisch generierte Challenge C für die Berechnung verwendet wird. Ein Angreifer kann nicht zuvor mitgehörte Responses R wiederverwenden.

Originalitätsprüfung der Komponente:

Die Komponente KOMP ist nur dann in der Lage die richtige Response R zu rechnen, wenn der Fingerprint (FP) mit dem Original-Referenzfingerprint (Ref-FP) des vertrauenswürdigen Herstellers übereinstimmt, der sich verpflichtet hat, Originalkomponenten zu liefern.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Das Konzept dieser Erfindung beschreibt eine einfache Möglichkeit für die Verifizierung der Originalität, Integrität und Authentizität einer elektronischen Komponente. Das erfindungsgemäße Verfahren und System bieten für viele kleine Feld-Komponenten (z.B. Sensoren, Aktuatoren, Speicher, usw.) die Möglichkeit deren Sicherheit zu erhöhen. Das erfindungsgemäße Verfahren dient zufolge zur Erhöhung der Gesamtsystemsicherheit einer Anlage, die eine Vielzahl von Komponenten umfassen kann

Das erfindungsgemäße Verfahren und Authentifizierungssystem ASYS benötigen keine komplexen Krypto-Verfahren (z.B. digitale Signaturen), um Komponenten (z.B. mittels des beschriebenen Challenge-Response-Protokoll basierend auf Hashfunktion oder anderen Algorithmen, insbesondere MAC, HMAC, CMAC, GMAC oder AEAD) zu authentisieren und authentifizieren.

Die bei dem erfindungsgemäße Verfahren und Authentifizierungssystem ASYS durchgeführten Hashberechnungen oder sonstigen Berechnungen können mit einem minimalen Aufwand für die Erhöhung der Sicherheit auf kleine hinsichtlich ihrer Ressourcen beschränkte elektronische Komponenten KOMP implementiert werden.

Das erfindungsgemäße Verfahren und das erfindungsgemäße Authentifizierungssystem ASYS sind mithilfe des Challenge-Response Protokolls gegenüber Replay-Attacken gesichert.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

Unabhängig vom grammatikalischen Geschlecht eines bestimmten Begriffes sind Personen mit männlicher, weiblicher oder anderer Geschlechteridentität mit umfasst.

Bezugszeichenliste

| | |
|---|---|
| FP | Fingerprint |
| Ref-FP | Referenz-Fingerprint |
| C | Challenge |
| R | Response |
| RE | Recheneinheit |
| RE-H | Recheneinheit des Herstellers |
| RE-K | Recheneinheit des Käufers |
| AT | Authentifizierungstag |
| MAC | MAC-Wert |
| H | Hashwert |
| KOMP | Komponente |
| BAK | Sicherer Kanal |
| ASYS | Authentifizierungssystem |

**Patentansprüche**

1. Computer-implementiertes Verfahren zur Authentifizierung einer von einem Hersteller hergestellten elektronischen Komponente (KOMP), bei dem die elektronische Komponente (KOMP) als von dem Hersteller stammend verifiziert wird, falls ein erster Authentisierungstag (AT1), welcher in Abhängigkeit eines Fingerprints (FP) der elektronischen Komponente (KOMP) und einer von einem Käufer der Komponente (KOMP) bereitgestellten Challenge (C) von einer Berechnungseinheit oder von einer Berechnungsroutine der elektronischen Komponente (KOMP) berechnet wird, mit einem zweiten Authentifizierungstag (AT2) übereinstimmt, welcher in Abhängigkeit eines gespeicherten Referenz-Fingerprints (Ref-FP) der elektronischen Komponente (KOMP) berechnet wird.

2. Computer-implementiertes Verfahren zur Authentifizierung einer von einem Hersteller hergestellten elektronischen Komponente nach Anspruch 1, wobei der berechnete Authentisierungstag (AT) einen berechneten Hashwert (H) oder einen berechneten MAC-Wert (MAC) aufweist.

3. Computer-implementiertes Verfahren zur Authentifizierung einer von einem Hersteller hergestellten elektronischen Komponente nach Anspruch 1 oder 2, wobei der Fingerprint (FP) von dem Hersteller der elektronischen Komponente (KOMP) vergeben wird und in der elektronischen Komponente (KOMP) integritätsgeschützt und vertrauenswürdig gespeichert wird.

4. Computer-implementiertes Verfahren zur Authentifizierung einer von einem Hersteller hergestellten elektronischen Komponente nach einem der Ansprüche 1 bis 3 mit den Schritten:

Vergeben (S1; SA1; SB1) einer eindeutigen Identifizierung (ID) und eines zugehörigen individuellen Fingerprints (FP) für eine hergestellte elektronische Komponente (KOMP) durch eine Recheneinheit des Herstellers (RE-H) der elektronischen Komponente (KOMP), wobei der für die hergestellte Komponente (KOMP) vergebene zugehörige individuelle Fingerprint (FP) integritätsgeschützt und vertrauensgeschützt in die hergestellte Komponente (KOMP) eingebracht wird und in einer Datenbank (DB-H) des Herstellers als Referenz-Fingerprint (Ref-FP) gespeichert wird;

Abfragen (S2; SA2; SB2) der eindeutigen Identifizierung (ID) der elektronischen Komponente (KOMP) durch eine Recheneinheit eines Käufers (RE-K), welcher die elektronische Komponente (KOMP) von dessen Hersteller über eine Lieferkette erhalten hat;

Übertragen (S3; SA6; SB4) einer Challenge (C) durch die Recheneinheit des Käufers (RE-K) an die elektronische Komponente (KOMP), welche die erhaltene Challenge (C) mit dem integritätsgeschützten und vertraulichkeitsgeschützten Fingerprint (FP) zu einem Verknüpfungswert verknüpft und basierend auf dem gebildeten Verknüpfungswert einen zu dem Fingerprint (FP) zugehörigen ersten Authentifizierungstag (AT1) berechnet;

Übertragen (S4; SA7; SB5) des zu dem Fingerprint (FP) gehörigen berechneten ersten Authentifizierungstags (AT1) als Response (R) von der elektronischen Komponente (KOMP) zu der Recheneinheit des Käufers (RE-K) und/oder zu der Recheneinheit (RE) des Herstellers (RE-H);

Berechnen (S5; SA8; SB8) durch die Recheneinheit des Käufers (RE-K) und/oder durch die Recheneinheit (RE) des Herstellers (RE-H) eines zweiten Authentifizierungstags (AT2) basierend auf einem Verknüpfungswert, welcher durch Verknüpfung der Challenge (C) mit dem Referenz-Fingerprint (Ref-FP) gebildet wird, der aus der Datenbank des Herstellers (DB-H) ausgelesenen oder von der Recheneinheit des Herstellers (RE-H) an die Recheneinheit des Käufers (RE-K) übertragen wird;

Vergleichen (S6; SA9; SB9) durch die Recheneinheit des Käufers (RE-K) und/oder durch die Recheneinheit des Herstellers (RE-H) des von der elektronischen Komponente (KOMP) als Response (R) erhaltenen ersten Authentifizierungstags (AT1) mit dem berechneten zweiten Authentifizierungstag (AT2) ; und

Verifizieren (S7; SA10; SB10) der Authentizität der elektronischen Komponente (KOMP), falls die beiden durch die Recheneinheit des Käufers (RE-K) und/oder durch die Recheneinheit des Herstellers (RE-H) miteinander verglichenen Authentifizierungstags (AT1, AT2) übereinstimmen.

5. Computer-implementiertes Verfahren zur Authentifizierung einer von einem Hersteller hergestellten elektronischen Komponente nach einem der Ansprüche 1 bis 4, mit den Schritten:

Senden (SA3) der abgefragten (S2) eindeutigen Identifizierung (ID) der elektronischen Komponente (KOMP) über einen sicheren integritätsgeschützten Kommunikationskanal (BAK) an die Recheneinheit des Herstellers (RE-H) der elektronischen Komponente (KOMP) zur Anforderung des zugehörigen individuellen Fingerprints (FP) der ausgelieferten elektronischen Komponente (KOMP);

Auslesen (SA4) des zugehörigen Referenz-Fingerprints (Ref-FP) aus der integritätsgeschützten und vertraulichkeitsgeschützten Datenbank (DB-H) des Herstellers anhand des von der Recheneinheit des Herstellers (RE-H) über den sicheren Kommunikationskanal (BAK) von der Recheneinheit des Käufers (RE-K) der elektronischen Komponente (KOMP) empfangenen eindeutigen Identifizierung (ID) der elektronischen Komponente (KOMP);

Senden (SA5) des aus der integritätsgeschützten und vertraulichkeitsgeschützten Datenbank des Herstellers (DB-H) der elektronischen Komponente (KOMP) ausgelesenen Referenz-Fingerprints (FP) durch die Recheneinheit des Herstellers (RE-H) über den sicheren und vertraulichkeitsgeschützten Kommunikationskanal (BAK) an die Recheneinheit des Käufers (RE-K) der elektronischen Komponente (KOMP), welcher in der Recheneinheit des Käufers (RE-K) gespeichert wird.

6. Computer-implementiertes Verfahren zur Authentifizierung einer von einem Hersteller hergestellten elektronischen Komponente nach einem der Ansprüche 1 bis 5 , mit den Schritten:

Speichern (SB3) der abgefragten (S2) eindeutigen Identifizierung (ID) der elektronischen Komponente (KOMP) in einem Speicher der Recheneinheit des Käufers (RE-K);

Senden (SB6) durch die Recheneinheit des Käufers (RE-K) der von der elektronischen Komponente (KOMP) abgefragten und gespeicherten (SB3) eindeutigen Identifizierung (ID) der elektronischen Komponente (KOMP) zusammen mit der Challenge (C) und zusammen mit dem von der elektronischen Komponente (KOMP) als Response ( R) erhaltenen ersten Authentifizierungstag (AT1) über einen sicheren Kommunikationskanal (BAK) an die Recheneinheit des Herstellers (RE-H) der elektronischen Komponente (KOMP) zur Anforderung einer Verifizierung der Komponente (KOMP) durch die Recheneinheit des Herstellers (RE-H);

Auslesen (SB7) des zugehörigen Referenz-Fingerprints (Ref-FP) aus der integritätsgeschützten und vertraulichkeitsgeschützten Datenbank (DB-H) des Herstellers anhand des von der Recheneinheit des Herstellers (RE-H) über den sicheren integritätsgeschützten Kommunikationskanal (BAK) von der Recheneinheit des Käufers (RE-K) empfangenen eindeutigen Identifizierung (ID) der elektronischen Komponente (KOMP).

7. Computer-implementiertes Verfahren zur Authentifizierung einer von einem Hersteller hergestellten elektronischen Komponente nach einem der vorangehenden Ansprüche 2 bis 6, wobei die durch die Recheneinheit des Käufers (RE-K) an die elektronische Komponente (KOMP) übertragene (S3; SA6; SB4) Challenge (C) mit dem integritätsgeschützten Fingerprint (FP) zur Bildung eines Verknüpfungswert kombiniert wird, insbesondere verkettet, konkateniert oder logisch verknüpft wird, und basierend auf dem gebildeten Verknüpfungswert der zu dem Fingerprint (FP) zugehörige erste Authentifizierungstag (AT1) berechnet wird.

8. Computer-implementiertes Verfahren zur Authentifizierung einer von einem Hersteller hergestellten elektronischen Komponente nach einem der vorangehenden Ansprüche 1 bis 7, wobei der individuelle Fingerprint (FP) für eine hergestellte elektronische Komponente (KOMP) eine generierte Zufallszahl aufweist.

9. Computer-implementiertes Verfahren zur Authentifizierung einer von einem Hersteller hergestellten elektronischen Komponente nach einem der vorangehenden Ansprüche 1 bis 8, wobei der individuelle Fingerprint (FP) für eine hergestellte elektronische Komponente (KOMP) einen hardwarespezifischen Fingerprint aufweist, der mittels einer PUF (Physical Unclonable Function) aus den physikalischen Eigenschaften und Herstellungsvariationen der elektronischen Komponente (KOMP) erzeugt wird.

10. Computer-implementiertes Verfahren zur Authentifizierung einer von einem Hersteller hergestellten elektronischen Komponente nach einem der vorangehenden Ansprüche 1 bis 9, wobei der individuelle Fingerprint (FP) für eine hergestellte elektronische Komponente (KOMP) in einem Firmware-Code der Komponente (KOMP) integritätsgeschützt integriert wird oder in einem Datenspeicher der Komponente (KOMP) integritätsgeschützt gespeichert wird.

11. Computer-implementiertes Verfahren zur Authentifizierung einer von einem Hersteller hergestellten elektronischen Komponente nach einem der vorangehenden Ansprüche 5 bis 10, wobei der zwischen der Recheneinheit des Herstellers (RE-H) und der Recheneinheit des Käufers (RE-K) bestehende sichere Kommunikationskanal (BAK) einen beidseitig authentisierten Kanal aufweist.

12. Computer-implementiertes Verfahren zur Authentifizierung einer von einem Hersteller hergestellten elektronischen Komponente nach einem der vorangehenden Ansprüche 4 bis 11, wobei die Challenge (C) durch einen Random-Zahlengenerator oder durch einen Zähler der Recheneinheit des Käufers (RE-K) generiert wird.

13. Computer-implementiertes Verfahren zur Authentifizierung einer von einem Hersteller hergestellten elektronischen Komponente nach einem der vorangehenden Ansprüche 2 bis 12, wobei jede Challenge (C) nur einmal verwendet wird.

14. Computer-implementiertes Verfahren zur Authentifizierung einer von einem Hersteller hergestellten elektronischen Komponente nach einem der vorangehenden Ansprüche 1 bis 13, wobei die elektronische Komponente (KOMP) als Bauteil in einem Gerät des Käufers verbaut ist oder eine eigenständige Komponente aufweist.

15. Computer-implementiertes Verfahren zur Authentifizierung einer von einem Hersteller hergestellten elektronischen Komponente nach einem der vorangehenden Ansprüche 1 bis 14, wobei die elektronische Komponente (KOMP) eine Feld-Komponente mit beschränkter Rechenleistung und beschränkter Speicherkapazität aufweist.

16. Authentifizierungssystem (ASYS) zur Authentifizierung einer von einem Hersteller hergestellten elektronischen Komponente (KOMP) mit:

einer Recheneinheit des Herstellers (RE-H) der elektronischen Komponente (KOMP), die dazu ausgelegt ist, eine eindeutige Identifizierung (ID) und einen zugehörigen individuellen Fingerprints (FP) für eine von dem Hersteller hergestellte elektronische Komponente (KOMP) zu vergeben (S1; SA1; SB1), wobei der für die hergestellte Komponente (KOMP) vergebene zugehörige individuelle Fingerprint (FP) integritätsgeschützt und vertraulichkeitsgeschützt in die hergestellte Komponente (KOMP) eingebracht wird und in einer Datenbank (DB-H) oder in einem sonstigen Speicher als Referenz-Fingerprint (Ref-FP) gespeichert wird;

einer Recheneinheit eines Käufers (RE-K) der elektronischen Komponente (KOMP), welcher die elektronische Komponente (KOMP) von dessen Hersteller über eine Lieferkette erhalten hat, die dazu ausgelegt ist, die eindeutige Identifizierung (ID) der elektronischen Komponente (KOMP) abzufragen (S2; SA2; SB2) und die dazu ausgelegt ist, eine Challenge (C) an die elektronische Komponente (KOMP) zu übertragen (S3; SA6; SB4);

wobei die elektronische Komponente (KOMP) eine integrierte Berechnungseinheit aufweist, welche dazu ausgelegt ist, die von der Recheneinheit des Käufers (RE-K) erhaltene Challenge (C) mit dem in ihr eingebrachten integritätsgeschützten und vertraulichkeitsgeschützten Fingerprint (FP) zu einem Verknüpfungswert zu verknüpfen und basierend auf dem gebildeten Verknüpfungswert einen zu dem Fingerprint (FP) zugehörigen ersten Authentifizierungstag (AT1) zu berechnen und diesen ersten Authentifizierungstag (AT1) als Response (R) zu der Recheneinheit des Käufers (RE-K) und/oder zu der Recheneinheit (RE) des Herstellers (RE-H) zu übertragen (S4; SA7; SB5);

wobei die Recheneinheit des Käufers (RE-K) und/oder durch die Recheneinheit (RE) des Herstellers (RE-H) dazu ausgelegt ist, einen zweiten Authentifizierungstag (AT2) basierend auf einem Verknüpfungswert, welcher durch Verknüpfung der Challenge (C) mit dem aus der Datenbank des Herstellers (DB-H) ausgelesenen Referenz-Fingerprint (Ref-FP) gebildet wird, zu berechnen (S5; SA8; SB8), und wobei die Recheneinheit des Käufers (RE-K) und/oder die Recheneinheit (RE) des Herstellers (RE-H) dazu ausgelegt ist, die Authentizität der elektronischen Komponente (KOMP) zu verifizieren (S7; SA10; SB10), falls die beiden durch die Recheneinheit des Käufers (RE-K) und/oder durch die Recheneinheit des Herstellers (RE-H) miteinander verglichenen (S6; SA9; SB9) Authentifizierungstags (AT1,AT2) ) übereinstimmen.

17. Authentifizierungssystem (ASYS) zur Authentifizierung einer von einem Hersteller hergestellten elektronischen Komponente, nach Anspruch 16, wobei zwischen der Recheneinheit des Herstellers (RE-H) und der Recheneinheit des Käufers (RE-K) ein sicherer Kommunikationskanal (BAK) aufgebaut wird.

18. Recheneinheit (RE) für ein Authentifizierungssystem (ASYS) zur Authentifizierung einer von einem Hersteller hergestellten elektronischen Komponente nach Anspruch 16, wobei die Recheneinheit (RE) dazu ausgelegt ist, die eindeutige Identifizierung (ID) der elektronischen Komponente (KOMP) über eine Schnittstelle abzufragen (S2; SA2; SB2) und die dazu ausgelegt ist, eine generierte Challenge (C) an die elektronische Komponente (KOMP) zu übertragen (S3; SA6; SB4) und einen ersten Authentifizierungstag (AT1) als Response (R) von der elektronischen Komponente (KOMP) zu erhalten (S4; SA7; SB5), und die dazu ausgelegt ist, einen zweiten Authentifizierungstag (AT2) basierend auf einem Verknüpfungswert, welcher durch Verknüpfung der lokal generierten Challenge (C) mit dem Referenz-Fingerprint (Ref-FP) gebildet wird, zu berechnen (S5; SA8; SB8), und die ferner dazu ausgelegt ist, die Authentizität der elektronischen Komponente (KOMP) zu verifizieren (S7; SA10; SB10), falls die beiden durch die Recheneinheit (RE) miteinander verglichenen (S6; SA9; SB9) Authentifizierungstags (AT1, AT2) übereinstimmen.

19. Komponente (KOMP), die durch ein Authentifizierungssystem (ASYS) nach Anspruch 16 verifizierbar ist, wobei die Komponente (KOMP) eine integrierte Berechnungseinheit oder Berechnungsroutine aufweist, welche dazu ausgelegt ist, eine von einer Recheneinheit (RE) des Authentifizierungssystems (ASYS) erhaltene Challenge (C) mit dem in der Komponente (KOMP) enthaltenen integritätsgeschützten Fingerprint (FP) zu einem Verknüpfungswert zu verknüpfen und basierend auf dem gebildeten Verknüpfungswert einen zu dem Fingerprint (FP) zugehörigen ersten Authentifizierungstag (AT1) zu berechnen, und die dazu ausgelegt ist, den berechneten ersten Authentifizierungstag (AT1) als Response (R) zu der Recheneinheit (RE) des Authentifizierungssystems (ASYS) zu übertragen (S4; SA7; SB5).

20. Komponente nach Anspruch 19, wobei die elektronische Komponente (KOMP) eine Hardware-Komponente aufweist.

21. Komponente nach Anspruch 20, wobei die elektronische Hardware-Komponente als Bauteil in einem Gerät des Käufers verbaut ist oder eine eigenständige Komponente aufweist.

22. Komponente nach Anspruch 20 oder 21, wobei die elektronische Hardware-Komponente eine Feld-Komponente mit beschränkter Rechenleistung und mit beschränkter Speicherkapazität aufweist, insbesondere einen Sensor, einen Aktuator oder eine Speicherkomponente.

23. Komponente nach Anspruch 19, wobei die elektronische Komponente (KOMP) eine Software-Komponente aufweist.

24. Gerät mit mindestens einer darin enthaltenen Komponente (KOMP) nach einem der Ansprüche 19 bis 23.

25. Gerät nach Anspruch 24, wobei das Gerät eine drahtlose oder drahtgebundene Schnittstelle zu einer Recheneinheit (RE) des Authentifizierungssystems (ASYS) nach Anspruch 16 aufweist.

26. Sichere Komponente für ein Gerät nach Anspruch 25, die dazu ausgelegt ist, eine Challenge (C) zu generieren, eine Response (R) zu empfangen, Authentifizierungstags (AT) zu berechnen und Authentifizierungstags (ATs) miteinander zu vergleichen.

FIG 1

# FIG 2

ASYS

| RE-H | RE-K | KOMP |
|------|------|------|

SA1

SA1

SA2
REQ-ID

BAK          ID

SA3
REQ-FP(ID)

SA4

SA5
Ref-FP

SA6
REQ-FPC(C)          $H1=H(C|FP)$

SA7
$R=H1$

SA8
$H2=H(C|Ref\text{-}FP)$

SA9
$H1=H2$ ?

SA10

VARIANTE A

# FIG 3

ASYS

| RE-H | RE-K | KOMP |

SB1

SB1

SB2
REQ-ID →

← ID

SB3

SB4
REQ-FP(C) →

SB5
R = H1
H1=H(C‖FP)

← BAK

SB6
REQ-CHECK (ID, C, R)

SB7  Ref-FP

SB8  H2=H(C‖Ref-FP)

SB9  H1 = H2 ?

SB10

SB11 →

VARIANTE B

| Europäisches Patentamt / European Patent Office / Office européen des brevets | **EUROPÄISCHER RECHERCHENBERICHT** | **Nummer der Anmeldung**<br>EP 24 18 6001 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/132704 A1 (ENGELS DANIEL W [US] ET AL) 12. Mai 2016 (2016-05-12)<br>* Absätze [0008] - [0016], [0041] - [0045], [0047] - [0048], [0057] - [0064], [0068], [0071], [0077], [0079], [0089] - [0095] *<br>* Absätze [0099] - [0100], [0102], [0113], [0118], [0122], [0125], [0201] *<br><br>-----  | 1-26 | INV.<br>G06F21/44<br>G06F21/73<br>G06Q10/08<br>H04W12/06<br>H04W12/12 |
| X | Dominik Dipl.-Wi.-Ing ET AL: "Schutz vor Produktpiraterie durch Kennzeichnung und Authentifizierung von Komponenten und Ersatzteilen im Maschinen-und Anlagenbau", , 14. Mai 2014 (2014-05-14), Seiten 1-396, XP055974303,<br>ISBN: 978-3-941702-39-4<br>Gefunden im Internet:<br>URL:https://mediatum.ub.tum.de/doc/1189432 /1189432.pdf<br>[gefunden am 2022-10-24]<br>* Abschnitte: Kurzzusammenfassung; 3 Aktueller Stand der Technik; 4.2 Abgrenzung zum aktuellen Stand der Wissenschaft und Forschung; 7.4 RFID als Sicherheitsmerkmal; 7.4.3 Challenge-Response und Krypto-Transponder *<br><br>-----  | 1-26 | |
| X | EP 2 473 954 B1 (SIEMENS AG [DE]) 21. Februar 2018 (2018-02-21)<br>* Absätze [0001], [0009] - [0016], [0015] - [0020], [0027] - [0029] *<br><br>-----<br><br>-/-- | 1-26 | **RECHERCHIERTE SACHGEBIETE (IPC)**<br>G06F<br>G06Q<br>H04W |

Der vorliegende Recherchenbericht wurde für alle Patentansprüche erstellt

| Recherchenort | Abschlußdatum der Recherche | Prüfer |
|---|---|---|
| München | 16. Dezember 2024 | Betz, Sebastian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

**EUROPÄISCHER RECHERCHENBERICHT**

**Nummer der Anmeldung**

EP 24 18 6001

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | "Process management for avionics - Counterfeit prevention - Part 1: Avoiding the use of counterfeit, fraudulent and recycled electronic components", IEC 62668-1:2019, IEC, 3, RUE DE VAREMBÉ, PO BOX 131, CH-1211 GENEVA 20, SWITZERLAND , 16. September 2019 (2019-09-16), Seiten 1-183, XP082052180, Gefunden im Internet: URL:https://api.iec.ch/harmonized/publications/download/454538 [gefunden am 2019-09-16] * Abschnitte: 4.12.4 Certificate of conformance and packing slip; A.11 Physical unclonable function; A.12 PUF and tags initiative and solutions * ----- | 1-26 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 16. Dezember 2024 | Betz, Sebastian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 18 6001

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-12-2024

| Im Recherchenbericht angeführtes Patentdokument | Datum der Veröffentlichung | Mitglied(er) der Patentfamilie | Datum der Veröffentlichung |
|---|---|---|---|
| US 2016132704 A1 | 12-05-2016 | EP 3066860 A2 | 14-09-2016 |
| | | US 2015134552 A1 | 14-05-2015 |
| | | US 2016132704 A1 | 12-05-2016 |
| | | WO 2015070055 A2 | 14-05-2015 |
| EP 2473954 B1 | 21-02-2018 | DE 102009039823 A1 | 03-03-2011 |
| | | EP 2473954 A1 | 11-07-2012 |
| | | ES 2664586 T3 | 20-04-2018 |
| | | JP 5661772 B2 | 28-01-2015 |
| | | JP 2013504105 A | 04-02-2013 |
| | | US 2012154111 A1 | 21-06-2012 |
| | | WO 2011026665 A1 | 10-03-2011 |

EPO FORM P0461

Für nähere Einzelheiten zu diesem Anhang : siehe Amtsblatt des Europäischen Patentamts, Nr.12/82